(19) **Europäisches Patentamt European Patent Office Office européen des brevets**

(11) **EP 4 093 610 B1**

(12) **EUROPEAN PATENT SPECIFICATION**

(45) Date of publication and mention of the grant of the patent:
**25.10.2023 Bulletin 2023/43**

(21) Application number: **21836304.2**

(22) Date of filing: **17.11.2021**

(51) International Patent Classification (IPC):
**B41F 16/00** (2006.01)  **B41M 3/14** (2006.01)
**B41M 99/00** (2006.01)  **B41M 3/00** (2006.01)
**A43B 1/00** (2006.01)  **G02B 5/00** (2006.01)
**D01F 1/10** (2006.01)  **A43B 5/02** (2006.01)
**G02B 5/26** (2006.01)  **G02B 5/28** (2006.01)

(52) Cooperative Patent Classification (CPC):
**B41F 16/008; A43B 1/0027; A43B 5/02;**
**G02B 5/12; G02B 5/1861; G02B 5/26; G02B 5/285;**
D01F 1/106

(86) International application number:
**PCT/US2021/072456**

(87) International publication number:
**WO 2022/115834 (02.06.2022 Gazette 2022/22)**

(54) **STRUCTURALLY-COLORED ARTICLES AND METHODS FOR MAKING AND USING STRUCTURALLY-COLORED ARTICLES**

STRUKTURELL GEFÄRBTE ARTIKEL UND VERFAHREN ZUR HERSTELLUNG UND VERWENDUNG VON STRUKTURELL GEFÄRBTEN ARTIKELN

ARTICLES STRUCTURALEMENT COLORÉS ET PROCÉDÉS DE FABRICATION ET D'UTILISATION D'ARTICLES STRUCTURALEMENT COLORÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2020 US 202063118240 P**

(43) Date of publication of application:
**30.11.2022 Bulletin 2022/48**

(73) Proprietor: **Nike Innovate C.V.**
**Beaverton, Oregon 97005-6453 (US)**

(72) Inventors:
• **GANTZ, Jeremy**
**Beaverton, Oregon 97005 (US)**

• **KOVEL, Kim**
**Beaverton, Oregon 97005 (US)**
• **WANG, Yuanmin**
**Beaverton, Oregon 97005 (US)**

(74) Representative: **Abel & Imray LLP**
**Westpoint Building**
**James Street West**
**Bath BA1 2DA (GB)**

(56) References cited:
**BR-A- PI0 503 224      JP-A- 2005 174 647**
**US-A1- 2020 308 734**

**Description**

CLAIM OF PRIORITY TO RELATED APPLICATION

This application claims the benefit of and priority to U.S. Provisional Application Serial No. 63/118,240, having the title "STRUCTURALLY-COLORED ARTICLES AND METHODS FOR MAKING AND USING STRUCTURALLY-COLORED ARTICLES", filed on November 25, 2020.

BACKGROUND

Structural color is caused by the physical interaction of light with the micro- or nano-features of a surface and the bulk material as compared to color derived from the presence of dyes or pigments that absorb or reflect specific wavelengths of light based on the chemical properties of the dyes or pigments. Color from dyes and pigments can be problematic in a number of ways. For example, dyes and pigments and their associated chemistries for fabrication and incorporation into finished goods may not be environmentally friendly.

JP 2005 174647 A discloses a colored body and an electroluminescence element formed from a light-transmitting material.

US 2020/308734 A1 discloses objects having an optical element that imparts structural color.

BR PI0 503 224 A discloses a film material that uses a regular two-dimensional mesh of non-cylindrical lenses to augment micro-images.

BRIEF DESCRIPTION OF THE DRAWINGS

Further embodiments of the present disclosure will be more readily appreciated upon review of the detailed description of its various embodiments, described below, when taken in conjunction with the accompanying drawings.

Figures 1A-1M shows various articles of footwear, apparel, athletic equipment, container, electronic equipment, and vision wear in accordance with the present disclosure, while Figures 1N(a)-1 Q(e) illustrate additional details regarding different types of footwear.

Figures 2A and 2B are transverse cross-section illustrations of optical unit having a textured surface and a substantially flat surface, respectively.

Figure 3A is a transverse cross-sectional illustration of substrate including an optical unit, while Figure 3B is a top view of an area and Figure 3C is a top view of a larger area.

The drawings described herein are for illustration purposes only and are not intended to limit the scope of the present disclosure in any way.

DESCRIPTION

The present disclosure provides for articles that exhibit structural colors through the use of an optical unit. The optical unit is disposed on a substrate (e.g., the surface of the article) and when exposed to visible light, the optical unit imparts a first structural color and a second structural to the article, where each structural color (e.g., single color, multicolor, iridescent) is visible color produced, at least in part, through optical effects (e.g., through scattering, refraction, reflection, interference, and/or diffraction of visible wavelengths of light). The optical unit includes a first base unit and one or more second units positioned on one or more areas of the first base unit, but the second unit(s) does not cover the entire surface of the first base unit. In other words, the second unit(s) is positioned on certain areas on an outer surface of the first base unit (e.g., the second unit(s) is stacked on certain areas on top of the first base unit) so as to produce a desired design or pattern, or can be randomly positioned.

The first base unit imparts a first structural color, while each of the second units impart one or more second structural colors. In one aspect, each second unit imparts the same structural color and in another aspect different second units can impart different structural colors (e.g., one group of second units can impart a second A structural color and another group can impart a second B structural color (second A structural color and second B structural color are different) and so on). The first structural color and the one or more second structural colors can be different in one or more of a hue, a value, a chroma, or any combination thereof when viewed from the same angle of observation from someone with 20 20 visual acuity from a distance of about 1 meter from the article under the same lighting conditions. As a result, the optical unit can produce an aesthetically pleasing and unique appearance that displays two or more structural colors in a design or pattern or randomly.

The first base unit and the second unit, independently of one another, of the optical unit can include one or more layers (e.g., a reflective layer(s), a constituent layer(s), and the like). The first base unit and each of the second base units can be single layer reflector, a single layer filter, a multilayer reflector or a multilayer filter. The first structural color is imparted, at least in part, by the layers of the first base unit. In one aspect, the imparted second structural color is attributed to the layers of the second unit and not the layers of the first base unit, while in another aspect, the imparted second structural color is attributed to the layers of the second unit in combination with the layers of the first base unit.

In addition, the optical unit can include an optional textured surface, where the optical unit is disposed on a surface of the article with the optional textured surface between the optical unit and the surface or where the textured surface is part of the optical unit, depending upon the design. The combination of the optical unit and the optional textured surface imparts the first structural color (e.g., and optionally the second structural color) to the article, where the first structural color and the second structural color can be designed to be different than the color of the components of the optical unit and/or the underlying material.

The article can be a finished article such as, for example, an article of footwear, apparel or sporting equipment. The article can be a component of an article of footwear, apparel or sporting equipment, such as, for example, an upper or a sole for an article of footwear, a waistband or arm or hood of an article of apparel, a brim of a hat, a portion of a backpack, or a panel of a soccer ball, and the like. The optical unit can be disposed on the surface so that the optical unit is parallel or substantially parallel the surface (e.g., the plane of the optical unit is parallel the plane of the surface of the article) (also referred to as "in-line", or "in-line" configuration) or so that the optical unit is perpendicular or substantially perpendicular the surface (also referred to as the optical unit laying "on its side", or "on its side" configuration). The optical unit that is on the opposite side from the surface of the article and optionally on the other exposed sides of the article where visible light can contact.

The optical unit can be disposed (e.g., affixed, attached, adhered, bonded, joined) on a surface of one or more components of the footwear, such as on the shoe upper and/or the sole. The optical unit can be incorporated into the sole by incorporating it into a cushioning element such as a bladder or a foam. The sole and/or upper can be designed so that one or more portions of the optical unit are visible in the finished article, by including an opening, or a transparent component covering the optical unit, and the like.

The present disclosure provides for an article comprising: a substrate including an optical unit, wherein the optical unit includes a first base unit and one or more second units positioned on one or more areas of the first base unit, wherein the first base unit imparts a first structural color, wherein each of the second units impart one or more second structural colors, wherein each second unit imparts the same or a different second structural color, wherein the first structural color and the one or more second structural colors are different in a hue, a value, a chroma, or any combination thereof when viewed from the same angle of observation from someone with 20 20 visual acuity, wherein the optical first base unit includes at least one layer, wherein the at least one second unit includes at least one layer, wherein the at least one second unit positioned on one or more areas does not cover the entire area of the first base unit.

The present disclosure will be better understood upon reading the following numbered aspects, which should not be confused with the claims. Any of the numbered aspects below can, in some instances, can be combined with aspects described elsewhere in this disclosure and such combinations are intended to form part of the disclosure.

Now having described embodiments of the present disclosure generally, additional discussion regarding embodiments will be described in greater details.

This disclosure is not limited to particular embodiments described, and as such may, of course, vary. The terminology used herein serves the purpose of describing particular embodiments only, and is not intended to be limiting, since the scope of the present disclosure will be limited only by the appended claims.

Where a range of values is provided, each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method may be carried out in the order of events recited or in any other order that is logically possible.

Embodiments of the present disclosure will employ, unless otherwise indicated, techniques of material science, chemistry, textiles, polymer chemistry, and the like, which are within the skill of the art. Such techniques are explained fully in the literature.

Unless otherwise defined, all technical and scientific terms used herein have the same meaning as commonly understood by one of ordinary skill in the art of material science, chemistry, textiles, polymer chemistry, and the like. Although methods and materials similar or equivalent to those described herein can be used in the practice or testing of the present disclosure, suitable methods and materials are described herein.

As used in the specification and the appended claims, the singular forms "a," "an," and "the" may include plural referents unless the context clearly dictates otherwise. Thus, for example, reference to "a support" includes a plurality of supports. In this specification and in the claims that follow, reference will be made to a number of terms that shall be defined to have the following meanings unless a contrary intention is apparent.

The present disclosure provides for articles (e.g., structural color article) that exhibit different structural colors from different areas of the article. The optical unit can be incorporated onto one or more components of an article, for example, when the article is an article of footwear, on an upper or sole of an article of footwear. The optical unit includes the first base unit that is disposed on a surface of a substrate and on the side of the first base unit that is opposite the surface of the substrate, one or more second units are disposed on the first base unit. Upon exposure to visible light, the first base unit imparts the first structural color while the second unit imparts the second structural color in areas where the second unit is present. The second structural color can, at least in part, be attributed to the second unit or can be attributed to the combination of the second unit and the first base unit In an aspect, the second structural color is solely attributed to the second unit and not the first base unit. Also, different second units can impart different structural colors, for example, a first group of second units can impart a second A structural color and a second group can impart a second B structural color (e.g., 2, 3, 4, 5, or more different structural colors can be imparted by different second units). As a result, in some areas that only include the first base unit, the first structural color is imparted, whereas in the areas that include the second unit, the second structural color is imparted so that aesthetically pleasing and unique designs or patterns or random structural colors can be displayed.

The structural color (e.g., first structural color and the second structural color) imparted by the optical unit can be a single color, multicolor, or iridescent, based, partly, on the changing angle of observation. The first structural color and the one or more second structural colors are different in a hue, a value, a chroma, or any combination thereof when viewed from the same angle of observation from someone with 20 20 visual acuity from a distance of about 1 meter from the article under the same lighting conditions.

The first base unit and the second unit, independently of one another, can be a single layer reflector, a single layer filter, a multilayer reflector or a multilayer filter. Generally, the first base unit and the second unit of the optical unit can include one or more layers (e.g., constituent layers, reflective layers). Also as described herein, the optical unit can optionally include a textured surface, such as a textured layer and/or a textured structure, where the textured surface is of a different dimensional scale and distinguishable from the protrusion(s) and/or indentation(s) provided herein. Optionally, the optical unit can include one or more layers (e.g., protection layer, and the like) to provide or give one or more characteristics to the optical unit (e.g., better wear characteristic, better adhesion characteristic, and the like).

The optical unit (e.g., first base unit and the second unit) can be disposed on a surface in a variety of ways. For example, the optical unit can be disposed on the surface so that each of the layers of the optical unit are parallel or substantially parallel the surface (e.g., disposed "in line"). In other words, the length and width of the layers of the optical unit define the plane, while the thickness of the layer is the smallest dimension. In another example, each of the layers of the optical unit are perpendicular or substantially perpendicular the surface. In either configuration, the optical unit can produce an aesthetically pleasing appearance.

In one or more embodiments of the present disclosure the surface of the article includes the optical unit, and is optionally a textured surface, where the optical unit and optionally the textured surface impart the structural color (e.g., first structural color, the second structural color). The optional textured surface can be disposed between the optical unit and the surface or be part of the optical unit, depending upon the design. Similarly, the textured surface can be disposed on the layer or a portion of the layer of the first base unit upon which the second unit is disposed so the textured surface and the second unit impart the second structural color. In other aspect, a textured surface can be present but does not contribute to the first structural color and/or the second structural color. In other words, the first structural color is attributed solely to the design and material of the first base unit and the second structural color is attributed solely to the design and materials of the second unit. Additional details are provided herein.

In an embodiment, the structural color may not be used in combination with a pigment and/or dye, so the structural color is independent of a pigment and/or dye. In another aspect, the structural color can be used in combination with a pigment and/or dye, but the structural color is not the same color, shade, and/or hue as the pigment and/or dye. In this regard, the structural color is the product of the textured surface, the optical unit, and/or the pigment and/or dye. In an embodiment, the structural color can be used in combination with a pigment and/or dye to enhance the color of the pigment and/or dye in regard to the color of the pigment and/or dye or enhance a tone, tint, shade, or hue associated with the pigment and/or dye.

The article can be an article of manufacture or a component of the article. The article of manufacture can include footwear, apparel (e.g., shirts, jerseys, pants, shorts, gloves, glasses, socks, hats, caps, jackets, undergarments), containers (e.g., backpacks, bags), and upholstery for furniture (e.g., chairs, couches, car seats), bed coverings (e.g., sheets, blankets), table coverings, towels, flags, tents, sails, and parachutes, or components of any one of these. In addition, the optical unit can be used with or disposed on textiles or other items such as striking devices (e.g., bats, rackets, sticks, mallets, golf clubs, paddles, etc.), athletic equipment (e.g., golf bags, baseball and football gloves, soccer ball restriction structures), protective equipment (e.g., pads, helmets, guards, visors, masks, goggles, etc.), locomotive equipment (e.g., bicycles, motorcycles, skateboards, cars, trucks, boats, surfboards, skis, snowboards, etc.), balls or pucks for use in various sports, fishing or hunting equipment, furniture, electronic equipment, construction materials, eyewear, timepieces, jewelry, and the like.

The article can be an article of footwear. The article of footwear can be designed for a variety of uses, such as sporting, athletic, military, work-related, recreational, or casual use. Primarily, the article of footwear is intended for outdoor use on unpaved surfaces (in part or in whole), such as on a ground surface including one or more of grass, turf, gravel, sand, dirt, clay, mud, pavement, and the like, whether as an athletic performance surface or as a general outdoor surface. However, the article of footwear may also be desirable for indoor applications, such as indoor sports including dirt playing surfaces for example (e.g., indoor baseball fields with dirt infields).

In particular, the article of footwear can be designed for use in indoor or outdoor sporting activities, such as global football/soccer, golf, American football, rugby, baseball, running, track and field, cycling (e.g., road cycling and mountain biking), and the like. The article of footwear can optionally include traction elements (e.g., lugs, cleats, studs, and spikes as well as tread patterns) to provide traction on soft and slippery surfaces, where components of the present disclosure can be used or applied between or among the traction elements and optionally on the sides of the traction elements but on the surface of the traction element that contacts the ground or surface. Cleats, studs and spikes are commonly included in footwear designed for use in sports such as global football/soccer, golf, American football, rugby, baseball, and the like, which are frequently played on unpaved surfaces. Lugs and/or exaggerated tread patterns are commonly included in footwear including boots design for use under rugged outdoor conditions, such as trail running, hiking, and military use.

In particular, the article can be an article of apparel (i.e., a garment). The article of apparel can be an article of apparel designed for athletic or leisure activities. The article of apparel can be an article of apparel designed to provide protection from the elements (e.g., wind and/or rain), or from impacts.

In particular, the article can be an article of sporting equipment. The article of sporting equipment can be designed for use in indoor or outdoor sporting activities, such as global football/soccer, golf, American football, rugby, baseball, running, track and field, cycling (e.g., road cycling and mountain biking), and the like.

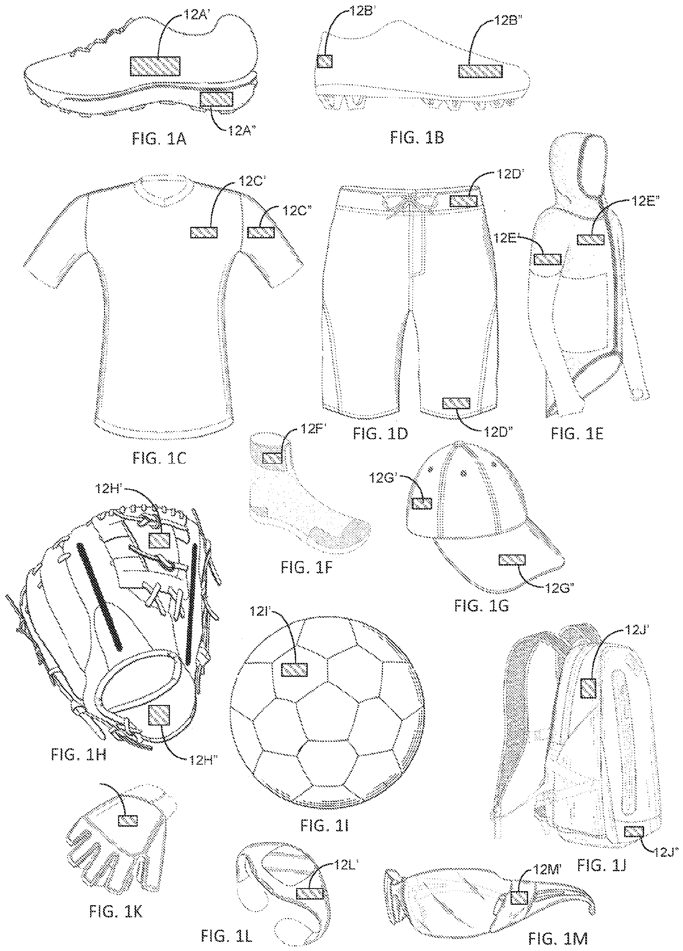

Figures 1A-1M illustrates footwear, apparel, athletic equipment, container, electronic equipment, and vision wear that include the structure (e.g., the optical unit, optionally the textured surface) of the present disclosure. The structure can include the optical unit in the "in-line" configuration and/or the "on its side" configuration. The structure including the optical unit is represented by hashed areas 12A'/12M' - 12A''/12M'. The location of the structure is provided only to indicate one possible area that the structure can be located. Also, two locations are illustrated in some of the figures and one location is illustrated in other figures, but this is done only for illustration purposes as the items can include one or a plurality of structure, where the size and location can be determined based on the item. The structure(s) located on each item can represent a number, letter, symbol, design, emblem, graphic mark, icon, logo, or the like.

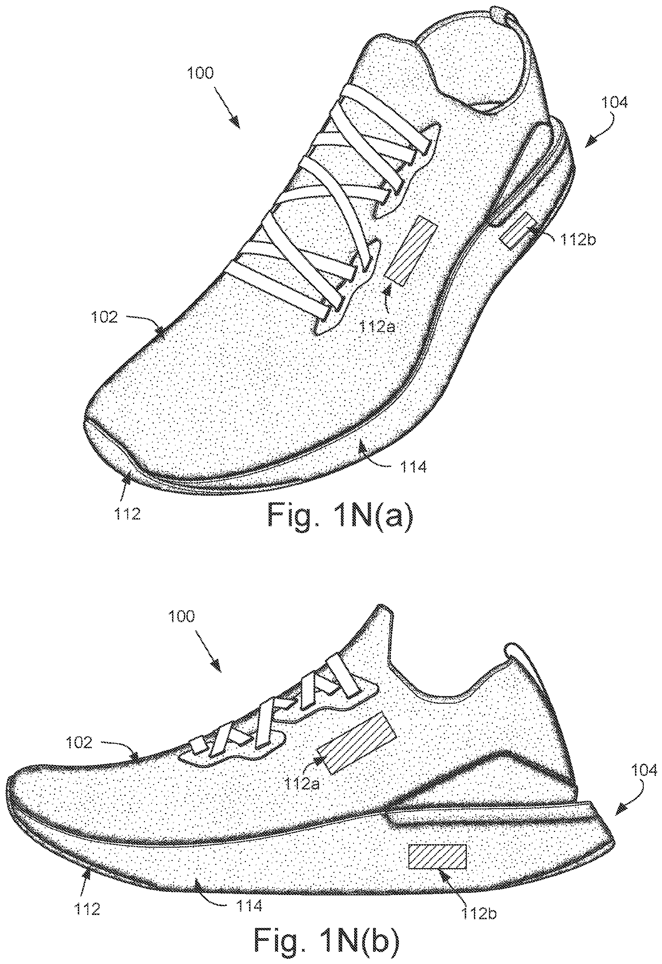

Figures 1 N(a) and 1 N(b) illustrate a perspective view and a side view of an article of footwear 100 that include a sole structure 104 and an upper 102. The structure including the optical unit is represented by 122a and 122b. The sole structure 104 is secured to the upper 102 and extends between the foot and the ground when the article of footwear 100 is worn. The primary elements of the sole structure 104 are a midsole 114 and an outsole 112. The midsole 114 is secured to a lower area of the upper 102 and may be formed of a polymer foam or another appropriate material. In other configurations, the midsole 114 can incorporate fluid-filled chambers, plates, moderators, and/or other elements that further attenuate forces, enhance stability, or influence motions of the foot. The outsole 112 is secured to a lower surface of the midsole 114 and may be formed from a wear-resistant rubber material that is textured to impart traction, for example. The upper 102 can be formed from various elements (e.g., lace, tongue, collar) that combine to provide a structure for securely and comfortably receiving a foot. Although the configuration of the upper 102 may vary significantly, the various elements generally define a void within the upper 102 for receiving and securing the foot relative to sole structure 104. Surfaces of the void within upper 102 are shaped to accommodate the foot and extend over the instep and toe areas of the foot, along the medial and lateral sides of the foot, under the foot, and around the heel area of the foot. The upper 102 can be made of one or more materials such as textiles, a polymer foam, leather, synthetic leather, and the like that are stitched or bonded together. Although this configuration for the sole structure 104 and the upper 102 provides an example of a sole structure that may be used in connection with an upper, a variety of other conventional or nonconventional configurations for the sole structure 104 and/or the upper 102 can also be utilized. Accordingly, the configuration and features of the sole structure 104 and/or the upper 102 can vary considerably.

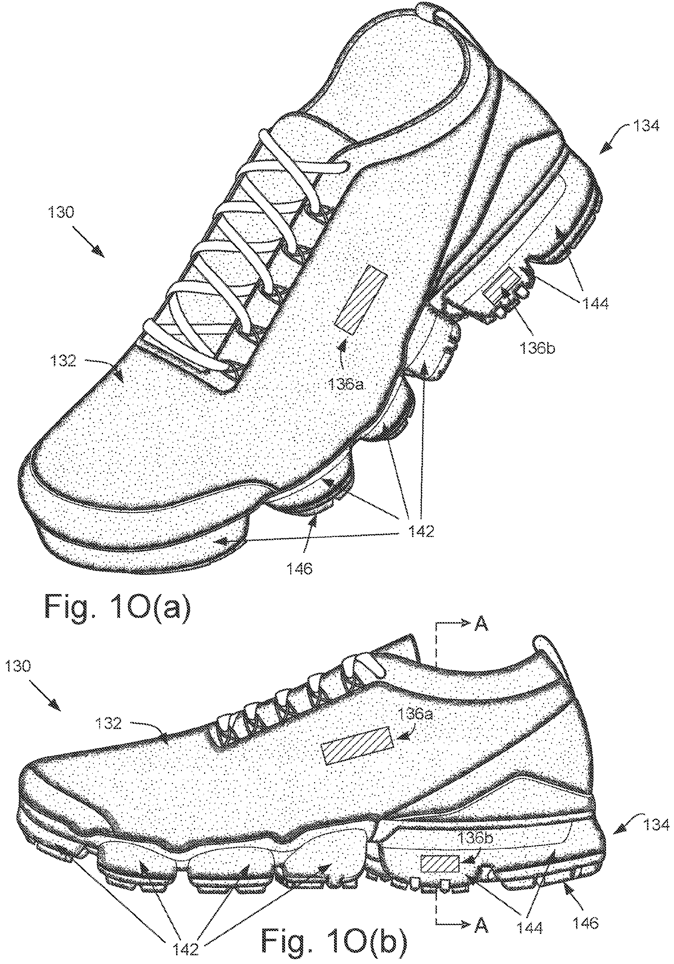

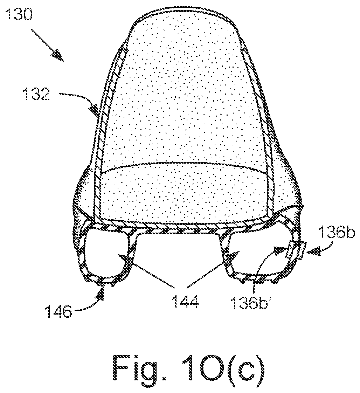

Figures 1O(a) and 1O(b) illustrate a perspective view and a side view of an article of footwear 130 that include a sole structure 134 and an upper 132. The structure including the optical unit is represented by 136a and 136b/136b'. The sole structure 134 is secured to the upper 132 and extends between the foot and the ground when the article of footwear 130 is worn. The upper 132 can be formed from various elements (e.g., lace, tongue, collar) that combine to provide a structure for securely and comfortably receiving a foot. Although the configuration of the upper 132 may vary significantly, the various elements generally define a void within the upper 132 for receiving and securing the foot relative to the sole structure 134. Surfaces of the void within the upper 132 are shaped to accommodate the foot and extend over the instep and toe areas of the foot, along the medial and lateral sides of the foot, under the foot, and around the heel area of the foot. The upper 132 can be made of one or more materials such as textiles, polymer foam, leather, synthetic leather, and the like that are stitched or bonded together.

The primary elements of the sole structure 134 are a forefoot component 142, a heel component 144, and an outsole 146. Each of the forefoot component 142 and the heel component 144 are directly or indirectly secured to a lower area of the upper 132 and formed from a polymer material that encloses a fluid, which may be a gas, liquid, or gel. During walking and running, for example, the forefoot component 142 and the heel component 144 compress between the foot and the ground, thereby attenuating ground reaction forces. That is, the forefoot component 142 and the heel component 144 are inflated and generally pressurized with the fluid to cushion the foot. The outsole 146 is secured to lower areas of the forefoot component 142 and the heel component 144 and may be formed from a wear-resistant rubber material that is textured to impart traction. The forefoot component 142 can be made of one or more polymers (e.g., layers of one or more polymers films) that form a plurality of chambers that includes a fluid such as a gas. The plurality of chambers can be independent or fluidically interconnected. Similarly, the heel component 144 can be made of one or more polymers (e.g., layers of one or more polymers films) that form a plurality of chambers that includes a fluid such as a gas and can also be independent or fluidically interconnected. In some configurations, the sole structure 134 may include a foam layer, for example, that extends between the upper 132 and one or both of the forefoot component 142 and the heel component 144, or a foam element may be located within indentations in the lower areas of the forefoot component 142 and the heel component 144. In other configurations, the sole structure 132 may incorporate plates, moderators, lasting elements, or motion control members that further attenuate forces, enhance stability, or influence the motions of the foot, for example. Although the depicted configuration for the sole structure 134 and the upper 132 provides an example of a sole structure that may be used in connection with an upper, a variety of other conventional or nonconventional configurations for the sole structure 134 and/or the upper 132 can also be utilized. Accordingly, the configuration and features of the sole structure 134 and/or the upper 132 can vary considerably.

Figure 1O(c) is a cross-sectional view of A-A that depicts the upper 132 and the heel component 144. The optical unit 136b can be disposed on the outside wall of the heel component 144 or alternatively or optionally the optical unit 136b' can be disposed on the inside wall of the heel component 144.

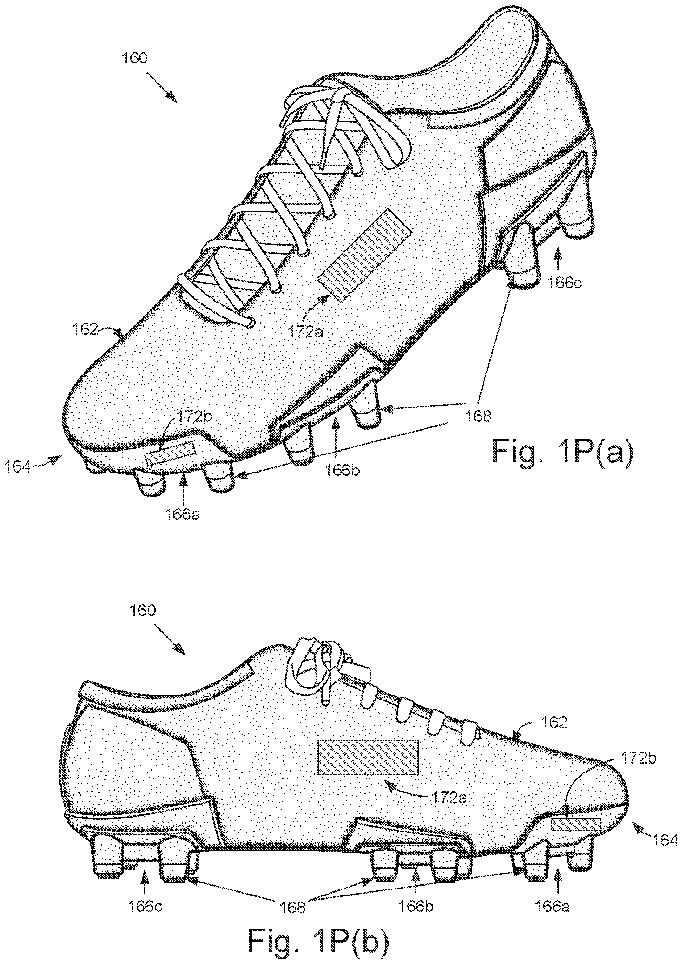

Figures 1 P(a) and 1 P(b) illustrate a perspective view and a side view of an article of footwear 160 that includes traction elements 168. The structure including the optical unit is represented by 172a and 172b. The article of footwear 160 includes an upper 162 and a sole structure 164, where the upper 162 is secured to the sole structure 164. The sole structure 164 can include a toe plate 166a, a mid-plate 166b, and a heel plate 166c as well as traction elements 168. The traction elements 168 can include lugs, cleats, studs, and spikes as well as tread patterns to provide traction on soft and slippery surfaces. In general, the cleats, studs and spikes are commonly included in footwear designed for use in sports such as global football/soccer, golf, American football, rugby, baseball, and the like, while lugs and/or exaggerated tread patterns are commonly included in footwear (not shown) including boots design for use under rugged outdoor conditions, such as trail running, hiking, and military use. The sole structure 164 is secured to the upper 162 and extends between the foot and the ground when the article of footwear 160 is worn. The upper 162 can be formed from various elements (e.g., lace, tongue, collar) that combine to provide a structure for securely and comfortably receiving a foot. Although the configuration of the upper 162 may vary significantly, the various elements generally define a void within the upper 162 for receiving and securing the foot relative to the sole structure 164. Surfaces of the void within upper 162 are shaped to accommodate the foot and extend over the instep and toe areas of the foot, along the medial and lateral sides of the foot, under the foot, and around the heel area of the foot. The upper 162 can be made of one or more materials such as textiles, a polymer foam, leather, synthetic leather, and the like that are stitched or bonded together. In other aspects not depicted, the sole structure 164 may incorporate foam, one or more fluid-filled chambers, plates, moderators, or other elements that further attenuate forces, enhance stability, or influence the motions of the foot. Although the depicted configuration for the sole structure 164 and the upper 162 provides an example of a sole structure that may be used in connection with an upper, a variety of other conventional or nonconventional configurations for the sole structure 164 and/or the upper 162 can also be utilized. Accordingly, the configuration and features of the sole structure 164 and/or the upper 162 can vary considerably.

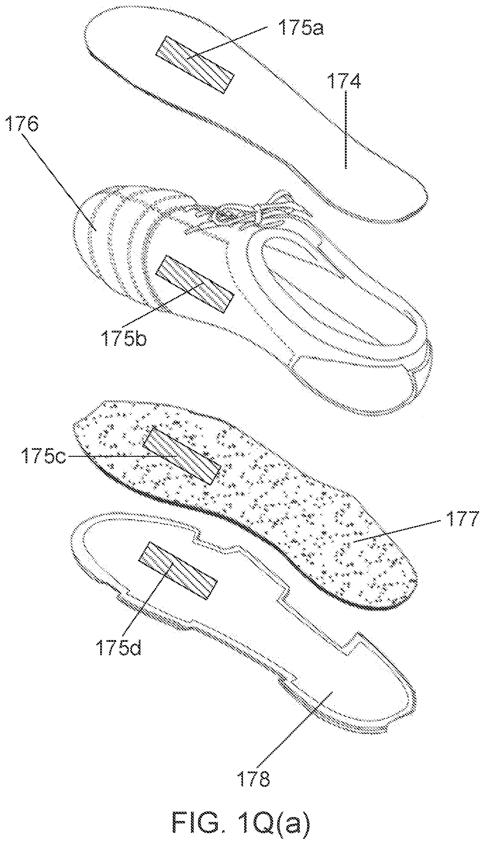

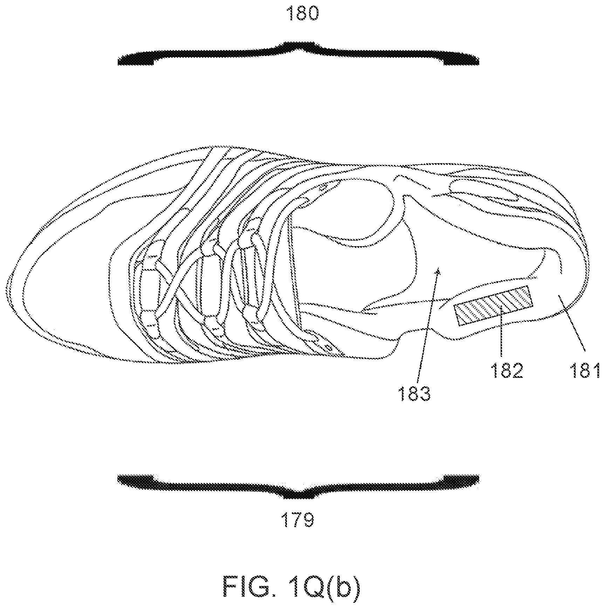

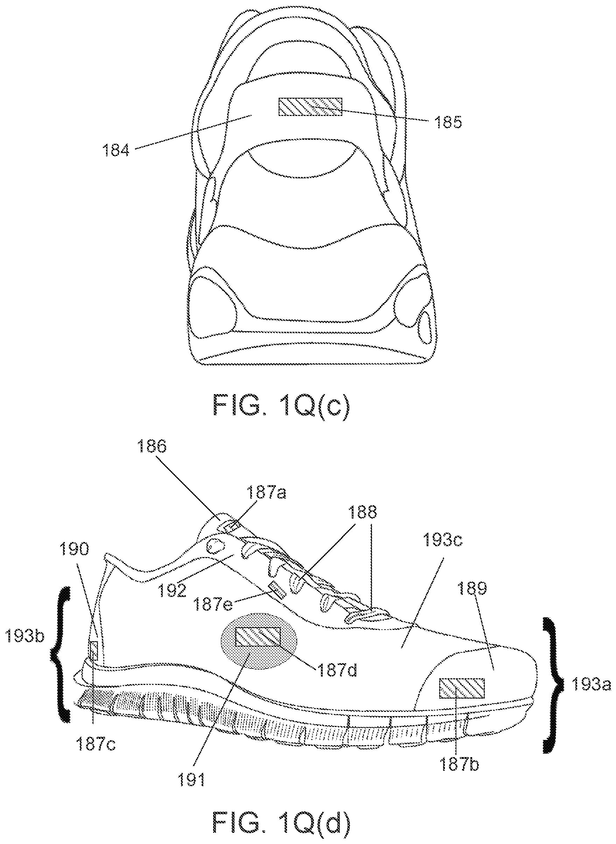

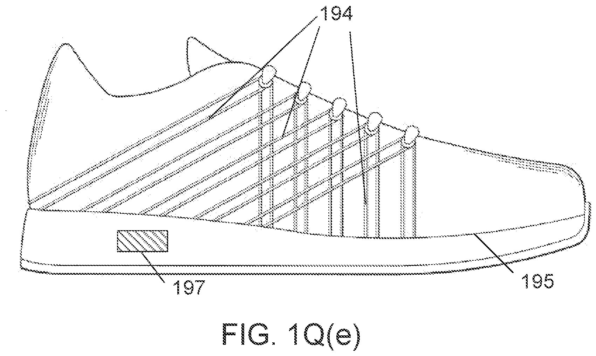

Figures 1 Q(a)-1 Q(e) illustrate additional views of exemplary articles of athletic footwear including various configurations of upper 176. Figure 1Q(a) is an exploded perspective view of an exemplary article of athletic footwear showing insole 174, upper 176, optional midsole or optional lasting board 177, and outsole 178, which can take the form of a plate. Structures including optical units are represented by 175a-175d. Figure 1Q(b) is a top view of an exemplary article of athletic footwear indicating an opening 183 configured to receive a wearer's foot as well as an ankle collar 181 which may include optical unit 182. The ankle collar is configured to be positioned around a wearer's ankle during wear, and optionally can include a cushioning element. Also illustrated are the lateral side 180 and medial side 179 of the exemplary article of athletic footwear. Figure 1Q(c) is a back view of the article of footwear depicted in Figure 1 Q(b), showing an optional heel clip 184 that can include optical unit 185. Figure 1Q(d) shows a side view of an exemplary article of athletic footwear, which may optionally also include a tongue 186, laces 188, a toe cap 189, a heel counter 190, a decorative element such as a logo 191, and/or eyestays for the laces 192 as well as a toe area 193a, a heel area 193b, and a vamp 193c. In some aspects, the heel counter 190 can be covered by a layer of knitted, woven, or nonwoven fabric, natural or synthetic leather, film, or other shoe upper material. In some aspects, the eyestays 192 are formed as one continuous piece; however, they can also comprise several separate pieces or cables individually surrounding a single eyelet or a plurality of eyelets. Structures including optical units are represented by 187a-187e. While not depicted, optical units can be present on the eyestays 192 and/or the laces 188. In some configurations, the sole structure can include a sole structure, such as a midsole having a cushioning element in part or substantially all of the midsole, and the optical unit can be disposed on an externally-facing side of the sole structure, including on an externally-facing side of the midsole. Figure 1Q(e) is a side view of another exemplary article of athletic footwear. In certain aspects, the upper can comprise one or more containment elements 194 such as wires, cables or molded polymeric component extending from the lace structure over portions of the medial and lateral sides of the exemplary article of athletic footwear to the top of the sole structure to provide lockdown of the foot to the sole structure, where the containment element(s) can have an optical unit (not shown) disposed on an externally-facing side thereon. In some configurations, a rand (not shown) can be present across part or all of the biteline 195.

Now having described embodiments of the present disclosure generally, additional details are provided. As has been described herein, the structural color can include one of a number of colors. The "color" of an article as perceived by a viewer can differ from the actual color of the article, as the color perceived by a viewer is determined by the actual color of the article (e.g., the color of the light leaving the surface of the article), by the presence of optical units which may absorb, refract, interfere with, or otherwise alter light reflected by the article, the viewer's visual acuity, by the viewer's ability to detect the wavelengths of light reflected by the article, by the characteristics of the perceiving eye and brain, by the intensity and type of light used to illuminate the article (e.g., sunlight, incandescent light, fluorescent light, and the like), as well as other factors such as the coloration of the environment of the article. As a result, the color of an object as perceived by a viewer can differ from the actual color of the article.

Conventionally, non-structural color is imparted to man-made objects by applying colored materials such as pigments or dyes to the object. Non-structurally colored materials are made of molecules (e.g., chromophores) that absorb all but particular wavelengths of light and reflect back the unabsorbed wavelengths, or which absorb and emit particular wavelengths of light. In non-structural color, it is the unabsorbed and/or the emitted wavelengths of light which impart the color to the article. As the color-imparting property is due to molecule's chemical structure, the only way to remove or eliminate the color is to remove the molecules or alter their chemical structure.

While "structural color" is found in nature, more recently, methods of imparting "structural color" to man-made objects have been developed. Structural color is color that is produced, at least in part, by microscopically structured surfaces that interfere with visible light contacting the surface. The structural color is color caused by physical structures which produce optical phenomena including the scattering, refraction, reflection, interference, and/or diffraction of light. In some aspects, structural color can be caused by one or more of these optical phenomena in combination with absorption or emission. For example, optical phenomena which impart structural color can include multilayer interference, thin-film interference, refraction, dispersion, light scattering, including Mie scattering, and diffraction, including diffraction grating. As structural color is produced by physical structures, destroying or altering the physical structures can eliminate or alter the imparted color. The ability to eliminate color by destroying the physical structure, such as by grinding or melting an article can facilitate recycling and reuse colored materials. In various aspects described herein, the structural color imparted to a region of an external surface of an article is visible to a viewer having 20/20 visual acuity and normal color vision from a distance of about 1 meter from the article, when the structurally-colored region is illuminated by about 30 lux of sunlight, incandescent light, or fluorescent light. In some such aspects, the structurally-colored region is at least one square centimeter in size up to 10s of square centimeters in size.

As described herein, structural color is produced, at least in part, by the optical unit, as opposed to the color being produced solely by pigments and/or dyes. The coloration of a structurally-colored article can be due solely to structural color (i.e., the article, a colored portion of the article, or a colored outer layer of the article can be substantially free of pigments and/or dyes). In another aspect, an optical unit can impart a "combined color," where a "combined color" can be described as having a structural color component and a non-structural color component. For example, structural color can be used in combination with pigments and/or dyes to alter all or a portion of a structural color, forming a combined color. In a combined color, the structural color component, when viewed without the non-structural color component, imparts a structural color having a first color and the non-structural color component, when viewed without the structural color component imparts a second color, where the first color and the second color differ in at least one of a color property or characteristic such as hue, value, chroma, color space coordinate, iridescence type, etc., or differ in hue or chroma. Further in this aspect, when viewed together, the first color and the second color combine to form a third, combined color, which differs in at least one color property or characteristic, or differ in hue and chroma from either the first color or the second color, for example, through shifting the reflectance spectrum of the optical unit.

In another aspect, an optical unit can impart a "modified color," where a "modified color" can be described as having a structural color component and a modifier component. In a modified color, the structural color component, when viewed without the modifier component, imparts a structural color having a specific hue and/or chroma and the modifier component, when viewed without the structural color component, does not impart any color, hue, or chroma. Further in this aspect, when viewed together, the modifier component can expand, narrow, or shift the range of wavelengths of light reflected by the structural color component.

In still another aspect, an optical unit can impart a "modified combined color," where a "modified combined color" can be described as having a structural color component having a first color, a non-structural color component having a second color, and a modifier component not imparting a color but instead functioning to expand, narrow, or shift the range of wavelengths of light reflected by the combined color formed from the structural color component and the non-structural color component.

In one aspect, the structural color component, combined color component, or modified color component disclosed herein is opaque; that is, it prevents light from passing through any articles to which they are applied. Further in this aspect, most wavelengths of light are absorbed by one or more layers of the structural color, combined color, or modified color component, with only a narrow band of light reflected about the wavelength of maximum reflectance.

"Hue" is commonly used to describe the property of color which is discernible based on a dominant wavelength of visible light, and is often described using terms such as magenta, orange, yellow, green, cyan, blue, indigo, violet, etc. or can be described in relation (e.g., as similar or dissimilar) to one of these. The hue of a color is generally considered to be independent of the intensity or lightness of the color. For example, in the Munsell color system, the properties of color include hue, value (lightness) and chroma (color purity). Particular hues are commonly associated with particular ranges of wavelengths in the visible spectrum: the range of about 750 to 635 nanometers is associated with red, the range of about 635 to 590 nanometers is associated with orange, the range of about 590 to 560 nanometers is associated with yellow, the range of about 560 to 520 nanometers is associated with green, the range of about 520 to 490 nanometers is associated with cyan, the range of about 490 nanometers to 450 nanometers is associated with blue, and the range of about 450 to 400 nanometers is associated with violet.

In various aspects described herein, the hue or hues of the structural color imparted to a region of an external surface of an article is visible to a viewer having 20/20 visual acuity and normal color vision from a distance of about 1 meter from the article, when the structurally-colored region is illuminated by about 30 lux of sunlight, incandescent light, or fluorescent light. Similarly, a viewer having 20/20 visual acuity and normal color vision, when viewing two structurally-colored regions under these conditions, where either both regions are on the same article, or the two regions are individually on different articles, can determine whether or not the hues imparted to the two regions are the same or different. Further, a viewer having 20/20 visual acuity and normal color vision, when viewing one structurally-colored region under these conditions but at two different viewing angles, can determine whether or not the hues imparted to the region are the same or different.

When used in the context of structural color, one can characterize the hue of a structurally-colored article, i.e., an article that has been structurally colored by incorporating an optical unit into the article, based on the wavelengths of light the structurally-colored portion of the article absorbs and reflects (e.g., linearly and non-linearly). While the optical unit may impart a first structural color, the presence of an optional textured surface and/or primer layer can alter the structural color. Other factors such as coatings or transparent elements may further alter the perceived structural color. The hue of the structurally colored article can include any of the hues described herein as well as any other hues or combination of hues.

The structural color can be referred to as a "single-hued" or "multi-hued" or "multi-hued with full iridescence" or "multi-hued with limited iridescence".

As used herein, single-hued structural color refers to a structural color in which the hue of the structural color does not vary (e.g., does not appear to shift between hues), or does not vary substantially (e.g., varies by about 10 percent or less, or by about 5 percent or less, or by about 1 percent or less) when the angle of observation or illumination is varied between or among two or more different angles that are at least 15 degrees, or 20 degrees, or 30 degrees, apart from each other (such as from 30 degrees to 45 degrees, from 45 degrees to 60 degrees, from 60 degrees to 75 degrees, and so on). In this way, the hue of a single-hued structural color can be described as being angle-independent, and a single-hued color is understood not to be iridescent or have a limited or full iridescence as described herein. A number of different color names, color systems and color wheels can be used to describe hues. The value (degree of lightness), or the chroma (the purity of the hue), or both the value and the chroma of a single-hued structural color can be angle dependent or can be angle independent. For example, the structural color can be a single-hued angle independent structural color in which the value and chroma of the single hue does not vary or does not vary substantially as the angle of observation or illumination is varied. Alternatively, the structural color can be a single-hued angle independent structural color in which the value, the chroma, or both the value and the chroma varies or varies substantially as the angle of observation or illumination is varied.

As used herein, multi-hued structural color refers to a structural color in which the hue of the structural color varies (e.g., appears to shift between hues) or varies substantially (e.g., varies by about 90 percent, about 95 percent, or about 99 percent) as the angle of observation or illumination is varied between or among two or more different angles that are at least 15 degrees, 20 degrees or 30 degrees, apart from each other (such as from 30 degrees to 45 degrees, from 45 degrees to 60 degrees, from 60 degrees to 75 degrees, and so on). In this way, a multi-hued structural color can be described as being angle-dependent, and a multi-hued structural color is understood to be iridescent or have limited or full iridescence, as described here. For example, a multi-hued structural color can display a different hue (e.g., as the angle of observation or illumination is varied, the imparted hue changes between/among 2, 3, 4, 5, 6 or more distinct hues). Each of the individual hues exhibited by the multi-hued structural color can be a primary color such as magenta, yellow or cyan, or red, yellow or blue, or can be a secondary hue such as orange, green or purple, or can be a tertiary hue such as red-orange or orange-red. The value, chroma or both the value and chroma of an individual hue exhibited by the multi-hued structural color can be angle dependent, meaning that the value, the chroma or both the value and the chroma of the individual hue varies as the angle of observation or illumination varies. The value, chroma or both the value and the chroma of the individual hue exhibited by the multi-hued structural can be angle independent, meaning that the value, the chroma, or both the value and chroma of the individual hue do not vary or do not vary substantially as the angle of observation or illumination is varied.

Multi-hued structural colors can be classified based on the type of iridescence they display. A multi-hued structural color can be a multi-hued structural color with full iridescence, meaning that it appears to display all or virtually all the hues of visible light in order (from shortest wavelength to longest wavelength, or from longest wavelength to shortest wavelength) as the angle of observation or illumination is varied, providing a "rainbow" effect. As used herein, multi-hued structural color with limited iridescence is understood to refer to multi-hued structural colors which vary between a limited number of individual hues (between 2, 3, 4, or 5 distinct hues (2-5, 3-5, 4-5 distinct hues)) as the angle of observation or illumination is varied between or among two or more different angles that are at least 15 degrees, 20 degrees, or 30 degrees apart from each other. Thus, multi-hued structural colors with limited iridescence do not exhibit the "rainbow" effect, but instead exhibit only a few hues and is distinguishable from multi-hued structural color with full iridescence and single-hued structural color.

The individual hues of the multiple hues exhibited by multi-hued structural colors with limited iridescence can be adjacent to each other on the color wheel (e.g., the multiple hues can include, and vary between, blue and blue-purple, or among blue-green, blue, and blue-purple). Alternatively, the individual hues of the multiple hues exhibited by a multi-hued structural color with limited iridescence may include hues which are not directly adjacent to each other on the color wheel, such that some hues directly adjacent to the imparted hues on the color wheel are omitted or "skipped over" (e.g., the multiple imparted hues can include, and vary between, orange-red and yellow-green, or the multiple imparted hues can include orange-red, orange, and yellow-green). In a multi-hued structural color with limited iridescence, each individual hue of the limited number of multiple hues may only be observed at a few angles (e.g., about 10 to 90 degrees or about 10 to 120 degrees or about 10 to 60 degrees) of observation or illumination. For example, a first hue (e.g., blue) can be exhibited at a majority (e.g., about 1 to 300 degrees or about 1 to 200 degrees) of angles of observation or illumination within a 360 degree radius, while a second hue (e.g., blue-purple) or the second hue and/or a third hue (e.g., blue-green) can be exhibited at a minority (e.g., about 10 to 90 degrees or about 10 to 120 degrees or about 10 to 60 degrees) of angles of observation or illumination within the 360 degree radius. In another example where the degree radius is less than 360 degrees, a first hue (e.g., blue) can be exhibited at a majority (e.g., about 50 to 90 percent of the degrees (e.g., about 90 to 162 degrees when the degree radius is 180) or about 50 to 80 percent or about 50 to 70 percent or about 60 to 90 percent or about 70 to 90 percent of the degrees) of angles of observation or illumination within a specific degree radius, while a second hue (e.g., blue-purple) or the second hue and/or a third hue (e.g., blue-green) can be exhibited at a minority (e.g., about 1 to 49 percent of the degrees or about 10 to 35 percent or about 10 to 25 percent of the degrees) of angles of observation or illumination within the specific degree radius.

When the multiple hues imparted by a multi-hued structural colors with limited iridescence includes one or more hues which are not directly adjacent to each other on the color wheel, the structural color can shift abruptly (e.g., changes quickly with a small (e.g., less than 15 degrees, less than 10 degrees, less than 5 degrees) change in the observation angle) from the first hue to the second hue as the angle of observation or illumination is varied, since the hues located on the color wheel between the imparted hues are omitted or "skipped over" and not imparted. For example, for a multi-hued structural color with limited iridescence which exhibits the hues of orange-red and yellow-green, when the angle of observation or illumination is varied within a 360 radius (or other specific radius, for example 180 degress), a plurality of intermediate hues between orange-red and yellow-green, such as orange, yellow-orange, and yellow, as well as hues on either side of orange-red and yellow-green, such as red, red-orange, etc. (hues representing colors of light having shorter wavelengths than orange-red) and green, green-yellow, green, blue, etc. (hues representing colors of light having longer wavelengths than yellow-green) are not imparted.

In an aspect, when the multiple hues imparted by a multi-hued structural colors with limited iridescence includes one or more hues which are directly adjacent to each other on the color wheel (e.g., hues which are analogous) or which are not directly adjacent to each other (e.g., complementary or split complementary hues, hues exhibiting a triadic or tetradic harmony, etc.) on the color wheel, the structural color can shift abruptly (e.g., changes quickly with a small (e.g., less than 15 degrees, less than 10 degrees, less than 5 degrees) change in the observation angle) from the first hue to the second hue as the angle of observation or illumination is varied. In another aspect, when the multiple hues imparted by a multi-hued structural colors with limited iridescence includes one or more hues which are directly adjacent to each other on the color wheel or which are not directly adjacent to each other on the color wheel, the structural color can shift gradually (e.g., changes over a long (e.g., great than 15 degrees, greater than 20 degrees, greater than 30 degrees) change in the observation angle) from the first hue to the second hue as the angle of observation or illumination is varied.

Similarly, other properties of the structural color, such as the lightness of the color, the saturation of the color, and the purity of the color, among others, can be substantially the same regardless of the angle of observation or illumination, or can vary depending upon the angle of observation or illumination. The structural color can have a matte appearance, a glossy appearance, or a metallic appearance, or a combination thereof.

As discussed above, the color (including hue) of a structurally-colored article (e.g., an article including an structural color) can vary depending upon the angle at which the structurally-colored article is observed or illuminated. The hue or hues of an article can be determined by observing the article, or illuminating the article, at a variety of angles using constant lighting conditions. As used herein, the "angle" of illumination or viewing is the angle measured from an axis or plane that is orthogonal to the surface. The viewing or illuminating angles can be set between about 0 and 180 degrees. The viewing or illuminating angles can be set at 0 degrees, 15 degrees, 30 degrees, 45 degrees, 60 degrees, and -15 degrees and the color can be measured using a colorimeter or spectrophotometer (e.g., manufactured by Konica, Minolta, etc.), which focuses on a particular area of the article to measure the color. The viewing or illuminating angles can be set at 0 degrees, 15 degrees, 30 degrees, 45 degrees, 60 degrees, 75 degrees, 90 degrees, 105 degrees, 120 degrees, 135 degrees, 150 degrees, 165 degrees, 180 degrees, 195 degrees, 210 degrees, 225 degrees, 240 degrees, 255 degrees, 270 degrees, 285 degrees, 300 degrees, 315 degrees, 330 degrees, and 345 degrees and the color can be measured using a colorimeter or spectrophotometer. In a particular example of a multi-hued article colored using only structural color can exhibit muti-hued structural color with limited iridescence, when measured at 0 degrees, 15 degrees, 30 degrees, 45 degrees, 60 degrees, and -15 degrees, the hues measured for the article consisted of "blue" at three of the measurement angles, "blue-green" at 2 of the measurement angles and "purple" at one of the measurement angles.

Various methodologies exist for defining color coordinate systems and for assigning color space coordinates to a color. One example is L*a*b* color space, where, for a given illumination condition, L* is a value for lightness, and a* and b* are values for color-opponent dimensions based on the CIE coordinates (CIE 1976 color space or CIELAB). In an embodiment, a structurally-colored article having structural color can be considered as having a "single" color when the change in color measured for the article is within about 10% or within about 5% of the total scale of the a* or b* coordinate of the L*a*b* scale (CIE 1976 color space) at three or more measured observation or illumination angles selected from measured at observation or illumination angles of 0 degrees, 15 degrees, 30 degrees, 45 degrees, 60 degrees, and -15 degrees.

A difference between two color measurements can be described mathematically in the CIELAB space based on the differences between the color coordinates of the two colors. For example, a first measurement has coordinates $L_1^*$, $a_1^*$ and $b_1^*$, and a second measurement has coordinates $L_2^*$, $a_2^*$ and $b_2^*$. The total difference between these two measurements on the CIELAB scale can be expressed as $\Delta E^*_{ab}$, which is calculated as follows: $\Delta E^*_{ab} = [(L_1^*-L_2^*)^2 + (a_1^*-a_2^*)^2 + (b_1^*-b_2^*)^2]^{1/2}$. Generally speaking, if two colors have a $\Delta E^*_{ab}$ of less than or equal to 1, the difference in color is not perceptible to human eyes, and if two colors have a $\Delta E^*_{ab}$ of greater than 100 the colors are considered to be opposite colors, while a $\Delta E^*_{ab}$ of about 2-3, or of 3 or more, is considered the threshold for perceivable color difference by most humans.

In an aspect, a first structural color (e.g., imparted to a first base unit) and a second structural color (e.g., imparted to a second unit) can be considered different structural colors if they have a $\Delta E^*_{ab}$ of greater than 2.2, greater than 3, greater than 4, greater than 5, or greater than 10. In another aspect, a first structural color (e.g., imparted to a first base unit) and a second structural color (e.g., imparted to a second unit) can be considered the same structural color if they have a $\Delta E^*_{ab}$ of less about 3 or less than 2.2.

In another aspect, a first section can be considered as having a "single" color when the $\Delta E^*_{ab}$ is less than 3, or less than 2.2, between pairs of measurements across three or more measured observation or illumination angles selected from measured at observation or illumination angles of 0 degrees, 15 degrees, 30 degrees, 45 degrees, 60 degrees, and -15 degrees. In yet another aspect, a first section can be can be considered to be multi-hued when the $\Delta E^*_{ab}$ between at least one pair of measurements is greater than 2.2, greater than 3, greater than 4, greater than 5, or greater than 10, where the measurements are taken at each of three or more observation or illumination angles chosen from 0 degrees, 15 degrees, 30 degrees, 45 degrees, 60 degrees, and -15 degrees. In an aspect, the first section can be multi-hued by imparting 2 different structural colors, multi-hued by imparting 3 different structural colors, or multi-hued by imparting 4 different structural colors, each at different angles of observation or illumination (e.g., about 15 degrees or more apart).

In the CIELAB space, the threshold of perceptible color difference based on the $\Delta E^*_{ab}$ calculation is about 2-3 and the perception of color by a viewer is dependent upon the physiology of the viewer, the viewing conditions, and the like, an individual viewer observing the first structural color and the second structural color may not be able to detect that the two structural colors are different, while the two structural colors may be considered to be different based on the $\Delta E^*_{ab}$ calculation, or based on a difference between their a* coordinates, their b* coordinates, or their a* and b* coordinates.

Similarly, the structural color at two different angles can be considered as corresponding substantially to one another by measuring according to the CIE 1976 color space, under a given illumination condition. The illumination condition can be at a single observation angle of about - 15 to 180 degrees or about -15 and 60 degrees perpendicular the horizontal plane of the optical unit (e.g., the plane parallel the layers of the optical unit). A first color measurement at a first angle of observation having coordinates $L_1^*$ and $a_1^*$ and $b_1^*$ over the wavelength range of 380 to 625 nanometers can be obtained. In addition, a second color measurement at the first angle of observation having coordinates $L_2^*$ and $a_2^*$ and $b_2^*$ over the first wavelength value can be obtained. The structural color can be compared in different ways. In one approach described above, $\Delta E^*_{ab} = [(L_1^*-L_2^*)^2 + (a_1^*-a_2^*)^2 + (b_1^*-b_2^*)^2]^{1/2}$, can be used to compare the first color measurement and the second color measurement. The first structural color and the second structural color can be considered the same or substantially indistinguishable when the $\Delta E^*_{ab}$ between the first color measurement and the second color measurement can be less than or equal to about 3, or optionally the $\Delta E^*_{ab}$ can be between the first color measurement and the second color measurement is less than or equal to about 2.2. If $\Delta E^*_{ab}$ is greater than 3, then the first structural color and the second structural color are different.

In another aspect, the minimum percent of reflectance of the wavelength range, the at least one peak, or set of peaks is independent of the angle of incident light upon the optical unit. The structural color is independent upon observation angle. Alternatively, the minimum percent of reflectance of the wavelength range, the at least one peak, or set of peaks is dependent of the angle of incident light upon the optical unit. The structural color is dependent upon observation angle.

The observation angle independence or dependence of a structural color can be determined. At a first observation angle the structural color is a first structural color and at a second observation angle the structural color is a second structural color. The first structural color and the second structural color can be the same or different. The similarity or difference in the first structural color and the second structural color at their respective angles of observation can be determined according to the CIE 1976 color space under a given illumination condition at two observation angles of about -15 to 180 degrees or about -15 degrees and +60 degrees and which are at least 15 degrees apart from each other. A first color measurement at the first observation angle having coordinates $L_1^*$ and $a_1^*$ and $b_1^*$ can be obtained. A second color measurement at the second observation angle having coordinates $L_2^*$ and $a_2^*$ and $b_2^*$ can be obtained. $\Delta E^*_{ab}$, as described above and herein, $\Delta E^*_{ab} = [(L_1^*-L_2^*)^2 + (a_1^*-a_2^*)^2 + (b_1^*-b_2^*)^2]^{1/2}$, can be used to correlate the first structural color and the second structural color at their angles of observation. When the $\Delta E^*_{ab}$ between the first color measurement and the second color measurement is less than or equal to about 2.2, or optionally the $\Delta E^*_{ab}$ between the first color measurement and the second color measurement is less than or equal to about 3, then the first structural color and the second structural color are the same or indistinguishable to the average observer. The first structural color and the second structural color are considered distinguishable or different when the $\Delta E^*_{ab}$ between the first color measurement and the second color measurement is greater than 3, or optionally wherein the $\Delta E^*_{ab}$ between the first color measurement and the second color measurement is greater than or equal to about 4 or 5, or 10.

Another example of a color scale is the CIELCH color space, where, for a given illumination condition, L* is a value for lightness, C* is a value for chroma, and h° denotes a hue as an angular measurement. In an aspect, a first structural color (e.g., imparted to a first base unit or article using an optical unit) and a second structural color (e.g., imparted to a second unitor article using an optical unit) can be considered to have the same color or hue when the hue measured for the first section is less than 10 degrees different or less than 5 degrees different than the hue measured for the second section at the h° angular coordinate of the CIELCH color space, at three or more measured observation or illumination angles selected from measured at observation or illumination angles of 0 degrees, 15 degrees, 30 degrees, 45 degrees, 60 degrees, and -15 degrees. In a further aspect, a first structural color (e.g., imparted to a first base unit or article) and a second structural color (e.g., imparted to a second unit or article) can be considered to have different colors or hues when the hue measured for the first section is at least 25 or is at least 45 degrees different than the hue measured for the second section at the h° angular coordinate of the CIELCH color space, at three or more measured observation or illumination angles selected from measured at observation or illumination angles of 0 degrees, 15 degrees, 30 degrees, 45 degrees, 60 degrees, and -15 degrees. In another aspect, an optical unit can be said to be single-hued when all areas of the optical unit have the same color in the CIELCH color space as defined herein, or can be multi-hued or multi-colored when at least two areas of the optical unit have different colors in the CIELCH color space.

Another system for characterizing color includes the "PANTONE" Matching System (Pantone LLC, Carlstadt, New Jersey, USA), which provides a visual color standard system to provide an accurate method for selecting, specifying, broadcasting, and matching colors through any medium. In an example, a first optical unit and a second optical unit can be said to have the same color when the color measured for each optical unit is within a certain number of adjacent standards, *e.g.,* within 20 adjacent PANTONE standards, at three or more measured observation or illumination angles selected from 0 degrees, 15 degrees, 30 degrees, 45 degrees, 60 degrees, and 75 degrees. In an alternative aspect, the first optical unit and the second optical unit can be said to have different colors when the color measured for each optical unit is outside a certain number of adjacent standards, *e.g.,* at least 20 adjacent PANTONE standards or farther apart, at three or more measured observation or illumination angles selected from 0 degrees, 15 degrees, 30 degrees, 45 degrees, 60 degrees, and 75 degrees. In another aspect, an optical unit can be said to be single-hued when all areas of the optical unit have the same PANTONE color as defined herein, or can be multi-hued or multi-colored when at least two areas of the optical unit have different PANTONE colors.

Another example of a color scale is the Natural Color System® or NCS, which is built on principles of human physiological vision and describes color by using color similarity relationships. The NCS is based on the premise that the human visual system consists of six elementary color precepts, or colors that can be challenging to define perceptually in terms of other colors. These colors consist of three pairs: (i) the achromatic colors of black (S) and white (W), (ii) the opposing primary color pair of red (R) and green (G), and (iii) the opposing primary color pair of yellow (Y) and blue (B). In the NCS, any color that can be perceived by the human eye can be similar to the two achromatic colors and a maximum of two non-opposing primary colors. Thus, for example, a perceived color can have similarities to red and blue but not to red and green. NCS descriptions of colors are useful for colors that belong to the surfaces of materials, so long as the surfaces are not fluorescent, translucent, luminescent, or the like; the NCS does not encompass other visual properties of the surface such as, for example, gloss and texture.

The NCS color space is a three dimensional model consisting of a flat circle at which the four primary colors are positioned in order at 0 degrees, 90 degrees, 180 degrees, and 270 degrees. For example, if yellow is at 0 degrees, red is at 90 degrees, blue is at 180 degrees, and green is at 270 degrees. White is represented above the circle and black below such that a hue triangle forms between the black/white (grayscale) axis and any point on the circle.

Percentage "blackness" (s) is defined in the NCS as a color's similarity to the elementary color black. Percentage "chromaticness" (c) represents similarity to the most saturated color in a hue triangle. "Hue" ($\phi$) in the NCS, meanwhile, represents similarity of a color to one or at most two non-opposing primary colors. Blackness and chromaticness add up to a value less than or equal to 100 percent; any remaining value is referred to as "whiteness" (w) of a color. In some cases, the NCS can be used to further describe "saturation" (m), a value from 0 to 1 determined in terms of chromaticness and whiteness (e.g., m = c/(w+c)). NCS can further be used to describe "lightness" (v), a description of whether the color contains more of the achromatic elementary colors black or white. A pure black article would have a lightness of 0 and a pure white article would have a lightness of 1. Purely neutral grays (c = 0) have lightness defined by v = (100-s)/100, while chromatic colors are first compared to a reference scale of grays and lightness is then calculated as for grays.

NCS notation takes the generic form sc-A$\phi$B, where sc defines "nuance," ss is the percent blackness and cc refers to the chromaticity; A and B are the two primary colors to which the color relates; and $\phi$ is a measure of where a color falls between A and B. Thus, a color (e.g., orange) that has equal amounts of yellow and red could be represented such that A$\phi$B = Y50R (e.g., yellow with 50 percent red), whereas a color having relatively more red than yellow is represented such that A$\phi$B = Y60R, Y70R, Y80R, Y90R, or the like. The color having equal amounts of yellow and red with a relatively low (10 percent) amount of darkness and a medium (50 percent) level of chromaticity would thus be represented as 1050-Y50R. In this system, neutral colors having no primary color components are represented by sc-N, where sc is defined in the same manner as with a non-neutral color and N indicates neutrality, while a pure color would have a notation such as, for example, 3050-B (for a blue with 30 percent darkness and 50 percent chromaticity). A capital "S" in front of the notation indicates that a value was present in the NCS 1950 Standard, a reduced set of samples. As of 2004, the NCS system contains 1950 standard colors.

The NCS is more fully described in ASTM E2970 - 15, "Standard Practice for Specifying Color by the Natural Colour System (NCS)." Although the NCS is based on human perception and other color scales such as the CIELAB or CIELCH spaces may be based on physical properties of objects, NCS and CIE tristimulus values are interconvertible.

In an example, a first optical unit and a second optical unit (or the same optical unit at different angles) can be considered as being the same structural color when the structural colors measured for each optical unit are within a certain number of adjacent standards, e.g., within 20 adjacent NCS values, at three or more measured observation or illumination angles selected from 0 degrees, 15 degrees, 30 degrees, 45 degrees, 60 degrees, and -15 degrees. In another example, the first optical unit and the second optical unit (or the same optical unit at different angles) can be considered as being different structural colors when the colors measured for each optical unit are outside a certain number of adjacent standards, e.g., farther apart than at least 20 adjacent NCS values, at three or more measured observation or illumination angles selected from 0 degrees, 15 degrees, 30 degrees, 45 degrees, 60 degrees, and -15 degrees. In another aspect, an optical unit can be said to be a single structural color when all areas of the optical unit have the same NCS color as defined herein, or can be multi-colored when at least two areas of the optical unit have different NCS colors. In another aspect, a single optical unit can be said to have a non-shifting color if it exhibits the same NCS color as defined herein at three or more measured observation or illumination angles (e.g., 0 degrees, 15 degrees, 30 degrees, 45 degrees, 60 degrees, and -15 degrees). In an alternative aspect, a single optical unit can be said to be shifting color if it exhibits two, three, or four different NCS colors as defined herein at two or more measured observation or illumination angles (e.g., 0 degrees, 15 degrees, 30 degrees, 45 degrees, 60 degrees, and -15 degrees).

A change or difference in color between two measurements (the same or different angles for a single structural color) and/or two colors (e.g., first structural color and the second structural color from the same of different angles) in the CIELAB space can be determined mathematically. For example, a first measurement (e.g., a first structural color) has coordinates $L_1^*$, $a_1^*$ and $b_1^*$, and a second measurement (e.g., a second structural color) has coordinates $L_2^*$, $a_2^*$ and $b_2^*$. The total difference between these two measurements on the CIELAB scale can be expressed as $\Delta E^*_{ab}$, which is calculated as follows: $\Delta E^*_{ab} = [(L_1^*-L_2^*)^2 + (a_1^*-a_2^*)^2 + (b_1^*-b_2^*)^2]^{1/2}$. Generally speaking, if two colors (e.g., first structural color and the second structural color) have a $\Delta E^*_{ab}$ of less than or equal to 1, the difference in color is not perceptible to human eyes, and if two colors (e.g., first structural color and the second structural color) have a $\Delta E^*_{ab}$ of greater than 100 the colors are considered to be opposite colors, while a $\Delta E^*_{ab}$ of about 2-3 is considered the threshold for perceivable color difference from someone with 20 20 visual acuity from a distance of about 1 meter from the article under the same lighting conditions.

In certain embodiments, a structural color (e.g., first structural color or second structural color) can be considered as having a "single" color when the $\Delta E^*_{ab}$ is less than 2, or less than 3, between three or more measured observation or illumination angles selected from measured at observation or illumination angles of 0 degrees, 15 degrees, 30 degrees, 45 degrees, 60 degrees, and -15 degrees.

In regard to a potential difference between structural color (at the same area of the optical unit the structural color or the first base unit and the second unit) can be observed at two different angles of observation. The difference can be determined in the CIELAB space mathematically. For example, a first measurement (e.g., obtained from a first angle) has coordinates $L_1^*$, $a_1^*$ and $b_1^*$, and a second measurement (e.g., obtained from a second angle) has coordinates $L_2^*$, $a_2^*$ and $b_2^*$. The total difference between these two measurements on the CIELAB scale can be expressed as $\Delta E^*_{ab}$, which is calculated as follows: $\Delta E^*_{ab} = [(L_1^*-L_2^*)^2 + (a_1^*-a_2^*)^2 + (b_1^*-b_2^*)^2]^{1/2}$. Generally speaking, if two structural colors have a $\Delta E^*_{ab}$ of less than or equal to 1, the difference in color is not perceptible to human eyes, and if two structural colors have a $\Delta E^*_{ab}$ of greater than 100 the colors are considered to be opposite colors, while a $\Delta E^*_{ab}$ of about 2-3 is considered the threshold for perceivable color difference and can depend upon the person perceiving the structural colors, the illumination considerations, and the like. The first structural color and the second structural color can be different in that they can have a $\Delta E^*_{ab}$ of greater than about 2.2, greater than about 3, greater than about 4, greater than about 5, or greater than about 10 or more. The first structural color and the second structural color can be the same or substantially the same in that they can have a $\Delta E^*_{ab}$ of less than about 3 or less than about 2. Since the threshold of perceivable color difference is about 2-3 and the perception is depended upon the person perceiving, the conditions, and the like, the first structural color and the second structural color may be subjectively the same or different depending upon the circumstance from someone with 20 20 visual acuity from a distance of about 1 meter from the article under the same lighting conditions.

In an aspect, the structural color (e.g., first structural color, second structural color, and so on) can be achromatic structural color (e.g., black, white, or neutral gray) or chromatic structural color. A "chromatic color" is a color in which one particular wavelength or hue predominates, while an "achromatic color" is a color in which no particular wavelength or hue predominates, as all wavelengths or hues are present in equal parts or substantially equal parts. The chromatic color can be selected from a red/yellow/blue (RYB) primary color, a RYB secondary color, a RYB tertiary color, a RYB quaternary color, a RYB quinary color, or a chromatic color that is a combination thereof. The chromatic color can be red, yellow, blue, green, orange, purple, or a chromatic color that is a combination thereof. The chromatic color can be red, orange, yellow, green, blue, indigo, violet, or a chromatic color that is a combination thereof. The chromatic color has hue and/or chroma according the Munsell color system. The chromatic color does not include black, white, or neutral gray. In an aspect, chromatic color and achromatic color are mutually exclusive of one another.

The achromatic color can be selected from black, white, or neutral gray. When the achromatic color is black, white, or a neutral gray, the phrase "pure achromatic color" can be used. As used herein, the achromatic color excludes the following colors: a warm gray, a warm brown, a warm tan, a cool gray, a cool brown, a cool tan, each of which is considered a chromatic color. For example, a warm gray, a warm brown, and a warm tan would be colors in which yellow or red predominates and so would not be achromatic. Similarly, a cool gray, a cool brown, and a cool tan would be colors in which blue or green predominates, and so would not be achromatic. Achromatic gray can include gainsboro gray, light gray, silver gray, medium gray, spanish gray, gray, dim gray, Davy's gray, jet gray, and the middle grays.

The method of making the structurally colored article can include disposing (e.g., affixing, attaching, bonding, fastening, joining, appending, connecting, binding) the optical unit onto an article (e.g., an article of footwear, an article of apparel, an article of sporting equipment, etc.) in an "in-line" or "on its side" configuration. The article includes a component, and the component has a surface upon which the optical unit can be disposed. The surface of the article can be made of a material such as a thermoplastic material or thermoset material, as described herein. For example, the article has a surface including a thermoplastic material (i.e., a first thermoplastic material), for example an externally-facing surface of the component or an internally-facing surface of the component (e.g., an externally-facing surface or an internally-facing surface a bladder). The optical unit can be disposed onto the thermoplastic material, for example. The surface upon which the optical unit is disposed is not opaque and is semi-transparent or transparent to light in from 380 to 740 nanometers, for example, the surface can have a minimum percent transmittance of about 30 percent or more, about 40 percent or more, or about 50 percent or more, for light in the visible spectrum.

In an aspect, the temperature of at least a portion of the first surface of the article including the thermoplastic material is increased to a temperature at or above creep relaxation temperature (Tcr), Vicat softening temperature (Tvs), heat deflection temperature (Thd), and/or melting temperature (Tm) of the thermoplastic material, for example to soften or melt the thermoplastic material. The temperature can be increased to a temperature at or above the creep relaxation temperature. The temperature can be increased to a temperature at or above the Vicat softening temperature. The temperature can be increased to a temperature at or above the heat deflection temperature. The temperature can be increased to a temperature at or above the melting temperature. While the temperature of the at least a portion of the first side of the article is at or above the increased temperature (e.g., at or above the creep relaxation temperature, the heat deflection temperature, the Vicat softening temperature, or the melting temperature of the thermoplastic material), the optical unit is affixed to the thermoplastic material within the at least a portion of the first side of the article. Following the affixing, the temperature of the thermoplastic material is decreased to a temperature below its creep relaxation temperature to at least partially re-solidify the thermoplastic material. The thermoplastic material can be actively cooled (e.g., removing the source that increases the temperature and actively (e.g., flowing cooler gas adjacent the article reducing the temperature of the thermoplastic material) or passively cooled (e.g., removing the source that increases the temperature and allowing the thermoplastic layer to cool on its own).

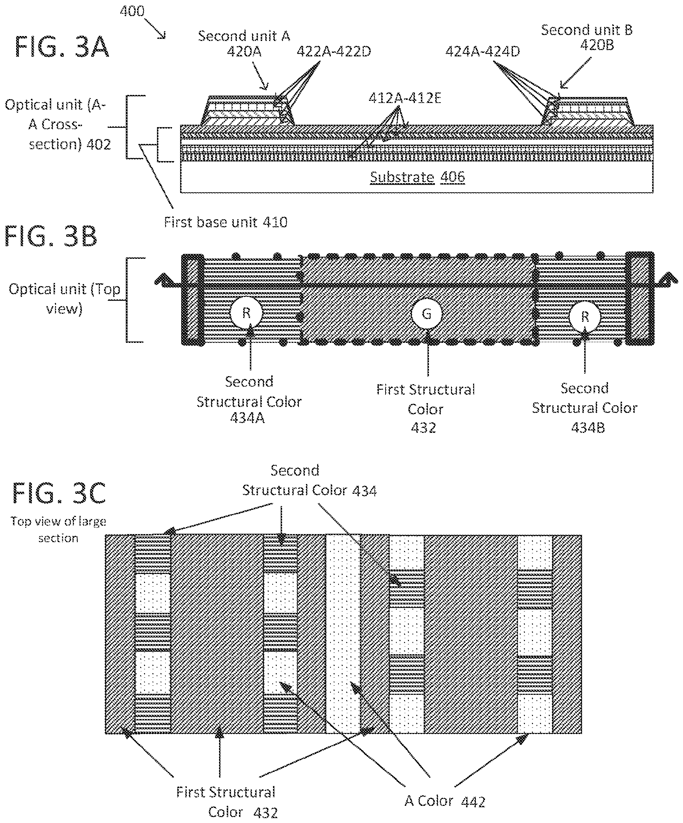

Now having described color and other aspects generally, additional details regarding the optical unit are provided. Figure 3A is a transverse cross-sectional illustration of a structure 400 that includes an optical unit 402 that has a first base unit 410 and a second unit A 420A and a second unit B 420B. The optical unit 402, in particular, the first base unit 410, is disposed on the substrate 406, while the second unit A 420A and second unit B 420B are disposed on the first base unit 410 of the side opposite the substrate 406. The first base unit 410 includes 5 layers 412A-412E (e.g., constituent layer and/or reflective layer) and the second unit A 420A and second unit B 420B includes 4 layers each 422A-422D and 424A-424D, respectively (e.g., constituent layer and/or reflective layer). Adjacent layers of the optical unit 402 are made of different materials. Second unit A 420A and second unit B 420B as depicted are the same or similar (e.g., both impart a second structural color), but they can optionally be different in the number of layers, material of the layers, the thickness of the layers, and the like so that each of second unit A 420A and second unit B 420B impart different structural colors.

The dimensions of the optical unit 402 and its components can vary depending upon the desired structural colors, design, surface upon which they are disposed, and the like. The first base unit 410 has a base unit height of about 10 to about 200 nanometers, about 50 to about 200 nanometers, about 50 to 500 nanometers, about 50 to 750 nanometers. Each the second units 420A and 420B, independently, can have a base unit height of about 10 to about 200 nanometers, about 50 to about 200 nanometers, about 50 to 500 nanometers, about 50 to 750 nanometers. Each of the second units 420A and 420B, independently, can have a second unit width of about 1 micrometer to 100 centimeters. Each of the second units 420A and 420B, independently, can have a second unit length of about 1 micrometer to 500 centimeters. The second units 420A and 420B can be part of groups where different groups have different dimensions (and optionally different structural colors). Pairs of second units 420A and 420B can have a distance between them of about 1 micrometer to 100 centimeters (and any increment therein in a range of 10 micrometers, 100 micrometers, etc), where the distance can be uniform among a group or can vary among different groups. Although not shown, a reflective layer can be positioned between the second unit 420A and/or 420B and the first base unit 410 so that the structural color of the second unit is only from the second unit optical layers.

Figure 3B is a top view of optical unit 402 shown Figure 3A that illustrates the first structural color (G) 432 and the second structural color (R) 434A and 434B. Figure 3C illustrates a top view of a larger area of the structure 400 (e.g., an article or portion of an article) to show how the first base unit 410 and the second unit 420A and 420B (and other second units) can be used to form a particular design. In addition, the article includes another color 442 (e.g., a structural color or a non-structural color) different or the same as than the first structural color 432 and the second structural color 434. In this regard, the surface of the substrate 406, for example, or another layer covering the first base unit 410 or the second unit 420A and 420B can be used to impart the other color 442. In another aspect, the other color 442 can be imparted by other second units 420 that are structurally or chemically different than the second units 420 imparting the second structural color 434. In an aspect, the other color 442 can be imparted using dye or pigments.

In general, the optical unit can be an inorganic optical unit, an organic optical unit, or a mixed inorganic/organic optical unit. The organic optical unit has at least one layer and that layer is made of an organic material. The organic material can include a polymer, such as those described herein. The organic material is made of a non-metal or non-metal oxide material. The organic material that does not include a metal or metal oxide or alloy. The organic material is made of a polymeric material that does not include a metal or metal oxide or alloy.

The inorganic optical unit has at least one layer and that layer is made of a non-organic material. As described in detail herein, the non-organic material can be a metal, metal oxide, and alloys. The non-organic material does not include any organic material.

The optical unit can be a mixed inorganic/organic optical unit, meaning that one or more of the layers can be made of an inorganic material, one or more layers can be made of an organic material, and/or one or more layers can be made of a layer of a mixture of inorganic and organic materials (e.g., a polymer include metal or metal oxide particles (e.g., micro- or nano-particles).

The optical unit includes at least one layer, which can be at least one constituent layer and/or at least one reflective layer (e.g., intermediate and/or non-intermediate reflective layers). The optical unit that can be or include a single layer reflector, a single layer filter, or multilayer reflector or a multilayer filter. The optical unit can function to modify the light that impinges thereupon so that structural color is imparted to the article. The optical unit can also optionally include one or more additional layers (e.g., a protective layer, the textured layer, a polymeric layer, and the like). The optical unit can have a thickness of about 50 to 100 nanometers, about 50 to 150 nanometers, about 50 to 500 nanometers, about 100 to 1,500 nanometers, about 100 to 1,200 nanometers, about 100 to about 700 nanometers, or of about 200 to about 500 nanometers.

The optical unit, or layers or portions thereof (e.g., reflective layer, constituent layer) can be formed using known techniques such as physical vapor deposition, electron beam deposition, atomic layer deposition, molecular beam epitaxy, cathodic arc deposition, pulsed laser deposition, sputtering deposition (e.g., radio frequency, direct current, reactive, non-reactive), chemical vapor deposition, plasma-enhanced chemical vapor deposition, low pressure chemical vapor deposition and wet chemistry techniques such as layer-by-layer deposition, sol-gel deposition, Langmuir blodgett, and the like, which can optionally use techniques (e.g., masks) to control the thickness of a layer in one or more areas of the surface of the article. The temperature of the first side can be adjusted using the technique to form the optical unit and/or a separate system to adjust the temperature.

As stated herein, the optical unit can comprise a single layer or multilayer reflector (e.g., reflective layer(s) and/or constituent layer(s)). The multilayer reflector can be configured to have a certain reflectivity at a given wavelength of light (or range of wavelengths) depending, at least in part, on the material selection, thickness and number of the layers of the multilayer reflector. In other words, one can judiciously select the materials, thicknesses, and numbers of the layers of a multilayer reflector and optionally its interaction with one or more other layers, so that it can reflect a certain wavelength of light (or range of wavelengths), to produce a desired structural color.

Each of the first base unit and the at least one second unit, independently, can include 1 to 20 layers, 2 to 15 layers, 4 to 15 layers, 2 to 10 layers, 4 to 6 layers, 2 to 6 layers, or 2 to 4 layers. Each layer can have a thickness that is about one-fourth of the wavelength of light to be reflected to produce the desired structural color. Each layer can have a thickness of at least 10 nanometers, optionally at least 30 nanometers, at least 40 nanometers, at least 50 nanometers, at least 60 nanometers, at least 100 nanometers, at least 150 nanometers, optionally a thickness of from about 10 nanometers to about 500 nanometers, about 10 nanometers to about 250 nanometers, about 10 nanometers to about 200 nanometers, about 10 nanometers to about 150 nanometers, about 10 nanometers to about 100 nanometers, or of from about 30 nanometers to about 80 nanometers, or from about 40 nanometers to about 60 nanometers. For example, the layer can be about 30 to 200 nanometers or about 30 to 150 nanometers, or about 20 to 50 nanometers thick.

The second units can have an area of about 1 micrometer squared to 100 centimeters squared, about 1 centimeter squared to 50 centimeters squared, about 5 centimeters squared to 25 centimeters squared, about 5 centimeters squared to 10 centimeters squared, or about 1 centimeter squared to 5 centimeters squared. In an aspect, the second unit can have a second unit length of about 1 micrometer to 500 centimeters, 1 centimeter to 100 centimeters, about 5 centimeters to 25 centimeters, about 5 centimeters to 10 centimeters, or about 1 centimeter to about 5 centimeters. In an aspect, the second unit can have a second unit width of about 1 micrometer to 500 centimeters, 1 centimeter to 100 centimeters, about 5 centimeters to 25 centimeters, about 5 centimeters to 10 centimeters, or about 1 centimeter to about 5 centimeters. In an aspect, the second unit can have a second unit radius of about 1 micrometer to 500 centimeters, 1 centimeter to 100 centimeters, about 5 centimeters to 25 centimeters, about 5 centimeters to 10 centimeters, or about 1 centimeter to about 5 centimeters.

Each of the first base unit and the at least one second unit can comprise a single layer or multilayer filter. The single layer or multilayer filter destructively interferes with light that impinges upon the article, where the destructive interference of the light and optionally interaction with one or more other layers or structures of the optical unit (e.g., a multilayer reflector, a textured structure) impart the structural color. In this regard, the layer of the single layer filter or the layers of the multilayer filter can be designed (e.g., material selection, thickness, number of layer, and the like) so that a single wavelength of light, or a particular range of wavelengths of light, make up the structural color. For example, the range of wavelengths of light can be limited to a range within plus or minus 30 percent or a single wavelength, or within plus or minus 20 percent of a single wavelength, or within plus or minus 10 percent of a single wavelength, or within plus or minus 5 percent or a single wavelength. The range of wavelengths can be broader to produce a more iridescent structural color.

Each layer for each of the first base unit and the at least one second unit can independently include a metal layer, an oxide layer, a metal alloy, or stainless steel. The oxide layer can be a metal oxide, a doped metal oxide, or a combination thereof. The metal layer, the metal oxide or the doped metal oxide, or metal alloy can include the following: the transition metals, the metalloids, the lanthanides, and the actinides, as well as nitrides, oxynitrides, sulfides, sulfates, selenides, tellurides and a combination of these. The metal layer can be titanium, aluminum, silver, zirconium, chromium, magnesium, silicon, gold, platinum, and a combination thereof or alloys thereof. The metal oxide can include titanium oxide, silver oxide, aluminum oxide, silicon dioxide, tin dioxide, chromia, iron oxide, nickel oxide, silver oxide, cobalt oxide, zinc oxide, platinum oxide, palladium oxide, vanadium oxide, molybdenum oxide, lead oxide, and combinations thereof as well as doped versions of each. In some aspects, the layer can consist essentially of a metal oxide. In some aspects, the layer can consist essentially of titanium dioxide. The metal oxide can be doped with water, inert gasses (e.g., argon), reactive gasses (e.g., oxygen or nitrogen), metals, and a combination thereof. In some aspects, the reflective layer can consist essentially of a doped metal oxide or a doped metal oxynitride or both. In an aspect, the reflective layer can be made of Ti or $TiTiO_x$ (x=1-2). The density of the Ti layer or $TiO_x$ layer can be about 3 to 6 grams per centimeter cubed, about 3 to 5 grams per centimeter cubed, about 4 to 5 grams per centimeter cubed, or 4.5 grams per centimeter cubed.

In addition, each layer can be made of liquid crystals. Each layer can be made of a material such as: silicon dioxide, titanium dioxide, zinc sulfide, magnesium fluoride, tantalum pentoxide, aluminum oxide, or a combination thereof. To improve adhesion between layers, a metal layer is adjacent a metal oxide layer formed of the same metal. For example, Ti and $TiO_x$ can be positioned adjacent one another to improve adhesion.

The material of the layer can be selected based on the desired structural color to be produced. Select materials reflect some wavelengths more than other wavelengths. In this way, the material of the layer can be selected based on the desired structural color. Each of the first base unit and the at least one second unit of the optical unit can be made with a combination of constituent layers and/or reflective layers so that the desired structural color is imparted. Each of the first base unit and the at least one second unit can include a reflective layer (e.g., disposed on the side of the unit opposite the layer upon which light enters) can have a minimum percent reflectance of about 50 percent or more (e.g., up to about 70 percent, about 80 percent, about 90 percent, about 95 percent, about 99 percent, or 100 percent) or optionally about 60 percent or more, about 70 percent or more, about 80 percent or more, about 90 percent or more, or about 95 percent or more. Each of the first base unit and the at least one second unit can include a reflective layer can have a minimum percent reflectance for one or more of the following wavelength ranges: violet 380 to 450 nanometer, blue 450 to 485 nanometer, cyan 485 to 500 nanometer, green 500 to 565 nanometer, yellow 564 to 590 nanometer, orange 590 to 625 nanometer, or red 625 to 740 nanometer. The reflective layer can have a minimum percent reflectance for one or more wavelength widths (e.g., about 10 nanometers, about 20 nanometers, about 30 nanometers, about 40 nanometers, about 50 nanometers, about 60 nanometers, about 75 nanometers, or about 100 nanometers) in the range from 380 to 740 nanometers. For the ranges not selected in a particular configuration, the minimum reflectivity is lower than that for the selected range, for example, the minimum reflectivity is lower than that for the selected range by about 10 percent or more, about 20 percent or more, about 30 percent or more, about 40 percent or more, or about 50 percent or more. In an aspect, the reflective layer can be Al or $AlO_x$, where the structural color is iridescent. In another example, the reflective layer can Ti or $TiO_x$, where the structural color can be one or more hues of blue or one or more hues of green, or a combination thereof.

The optical unit can be a coating on the surface of the article. The coating can be chemically bonded (e.g., covalently bonded, ionically bonded, hydrogen bonded, and the like) to the surface of the article. The coating has been found to bond well to a surface made of a polymeric material. In an example, the surface of the article can be made of a polymeric material such as a polyurethane, including a thermoplastic polyurethane (TPU), as those described herein.

The material of the optical unit can be uncolored (e.g., no pigments or dyes added to the structure or its layers), colored (e.g., pigments and/or dyes are added to the structure or its layers (e.g., dark or black color)). The surface of the component upon which the optical unit is disposed can be uncolored (e.g., no pigments or dyes added to the material), colored (e.g., pigments and/or dyes are added to the material (e.g., dark or black color)), reflective, and/or transparent (e.g., percent transmittance of 75 percent or more).

The layers can be formed in a layer-by-layer manner, where each layer has a different index of refraction. Each of layers can be formed using known techniques such as those described above and herein.

As mentioned above, the optical unit can include one or more layers in addition to the reflective layer(s) and/or the constituent layer(s). The optical unit has a first side and a second side, where the first side or the second side is adjacent the surface of the component. The one or more other layers of the optical unit can be on the first side and/or the second side of the optical unit. For example, the optical unit can include a protective layer and/or a polymeric layer such as a thermoplastic polymeric layer, where the protective layer and/or the polymeric layer can be on one or both of the first side and the second side of the optical unit. One or more of the optional other layers can include a textured surface. Alternatively or in addition to, one or more of the reflective layer(s) and/or one or more constituent layer(s) of the optical unit can include a textured surface.

A protective layer can be disposed on the first and/or second side of the optical unit, on the outside most layer to protect the optical unit. The protective layer is more durable or more abrasion resistant than the other layers. The protective layer is optically transparent to visible light. The protective layer can be on the first side and/or the second side of the optical unit to protect the other layers on the respective side. All or a portion of the protective layer can include a dye or pigment in order to alter an appearance of the structural color. The protective layer can include silicon dioxide, glass, combinations of metal oxides, or mixtures of polymers. The protective layer can have a thickness of about 3 nanometers to 1 millimeter.

The protective layer can be formed using physical vapor deposition, chemical vapor deposition, pulsed laser deposition, evaporative deposition, sputtering deposition (e.g., radio frequency, direct current, reactive, non-reactive), plasma enhanced chemical vapor deposition, electron beam deposition, cathodic arc deposition, low pressure chemical vapor deposition and wet chemistry techniques such as layer by layer deposition, sol-gel deposition, Langmuir blodgett, and the like. Alternatively or in addition, the protective layer can be applied by spray coating, dip coating, brushing, spin coating, doctor blade coating, and the like.

A polymeric layer can be disposed on the first and/or the second side of the optical unit. The polymeric layer can be used to dispose the optical unit onto an article, such as, for example, when the article does not include a thermoplastic material to adhere the optical unit. The polymeric layer can comprise a polymeric adhesive material, such as a hot melt adhesive. The polymeric layer can be a thermoplastic material and can include one or more layers. The thermoplastic material can be any one of the thermoplastic material described herein. The polymeric layer can be applied using various methodologies, such as spin coating, dip coating, doctor blade coating, and so on. The polymeric layer can have a thickness of about 3 nanometer to 1 millimeter.

Having described aspects, additional details will now be described for the optional textured surface. As described herein, the article includes the optical unit that optionally include a textured surface, where the textured surface is distinct from the protrusions and indentations as described herein. The textured surface can be a surface of a textured structure or a textured layer. The textured surface may be provided as part of the optical unit. For example, the optical unit may comprise a textured layer or a textured structure that comprises the textured surface. The textured surface may be provided as part of the article to which the optical unit is disposed. For example, the unit may be disposed onto the surface of the article where the surface of the article is a textured surface, or the surface of the article includes a textured structure or a textured layer affixed to it. In contrast, each layer of the first base unit and/or second unit can be flat or substantially flat and not include a texture that contributes to imparting the first or second structural color.

The textured surface (or a textured structure or textured layer including the textured surface) may be provided as a feature on or part of another medium, such as a transfer medium, and imparted to a side or layer of the optical unit or to the surface of the component. For example, a mirror image or relief form of the textured surface may be provided on the side of a transfer medium, and the transfer medium contacts a side of the optical unit or the surface of the component in a way that imparts the textured surface to the optical unit or article. While the various embodiments herein may be described with respect to a textured surface of the optical unit, it will be understood that the features of the textured surface, or a textured structure or textured layer, may be imparted in any of these ways.

The textured surface can contribute to the structural color resulting from the optical unit. As described herein, structural coloration is imparted, at least in part, due to optical effects caused by physical phenomena such as scattering, diffraction, reflection, interference or unequal refraction of light rays from an optical unit. The textured surface (or its mirror image or relief) can include a plurality of profile features and flat or planar areas, which are distinct from the protrusions and indentions described herein. For example, the textured surface (e.g., profile features, flat or planar areas) are superimposed on the protrusions and indentations. In general, the size of the protrusions and indentations is larger than the profile features. The plurality of profile features included in the textured surface, including their size, shape, orientation, spatial arrangement, etc., can affect the light scattering, diffraction, reflection, interference and/or refraction resulting from the optical unit. The flat or planar areas included in the textured surface, including their size, shape, orientation, spatial arrangement, etc., can affect the light scattering, diffraction, reflection, interference and/or refraction resulting from the optical unit. The desired structural color can be designed, at least in part, by adjusting one or more of properties of the profile features and/or flat or planar areas of the textured surface.

The profile features can extend from a side of the flat areas, so as to provide the appearance of projections and/or depressions therein. A flat area can be a flat planar area. A profile feature may include various combinations of projections and depressions, which are distinct from the protrusions and indentations. For example, a profile feature may include a projection with one or more depressions therein, a depression with one or more projections therein, a projection with one or more further projections thereon, a depression with one or more further depressions therein, and the like. The flat areas do not have to be completely flat and can include texture, roughness, and the like. The texture of the flat areas may not contribute much, if any, to the imparted structural color. The texture of the flat areas typically contributes to the imparted structural color. For clarity, the profile features and flat areas are described in reference to the profile features extending above the flat areas, but the inverse (e.g., dimensions, shapes, and the like) can apply when the profile features are depressions in the textured surface.

The textured surface can comprise a thermoplastic material. The profile features and the flat areas can be formed using a thermoplastic material. For example, when the thermoplastic material is heated above its softening temperature a textured surface can be formed in the thermoplastic material such as by molding, stamping, printing, compressing, cutting, etching, vacuum forming, etc., the thermoplastic material to form profile features and flat areas therein. The textured surface can be imparted on a side of a thermoplastic material. The textured surface can be formed in a layer of thermoplastic material. The profile features and the flat areas can be made of the same thermoplastic material or a different thermoplastic material.

The textured surface generally has a length dimension extending along an x-axis, and a width dimension extending along a z-axis, and a thickness dimension extending along a y-axis. The textured surface has a generally planar portion extending in a first plane that extends along the x-axis and the z-axis. A profile feature can extend outward from the first plane, so as to extend above or below the plane x. A profile feature may extend generally orthogonal to the first plane, or at an angle greater to or less than 90 degrees to the first plane.

The dimensional measurements in reference to the profile features (e.g., length, width, height, diameter, and the like) described herein refer to an average dimensional measurement of profile features in 1 square centimeter in the optical unit.

The dimension (e.g., length, width, height, diameter, depending upon the shape of the profile feature) of each profile feature can be within the nanometer to micrometer range. A textured surface can have a profile feature and/or flat area with a dimension of about 10 nanometers to about 500 micrometers. The profile feature can have dimensions in the nanometer range, e.g., from about 10 nanometers to about 1000 nanometers. All of the dimensions of the profile feature (e.g., length, width, height, diameter, depending on the geometry) can be in the nanometer range, e.g., from about 10 nanometers to about 1000 nanometers. The textured surface can have a plurality of profile features having dimensions that are 1 micrometer or less. In this context, the phrase "plurality of the profile features" is meant to mean that about 50 percent or more, about 60 percent or more, about 70 percent or more, about 80 percent or more, about 90 percent or more, or about 99 percent or more of the profile features have a dimension in this range. The profile features can have a ratio of width:height and/or length:height dimensions of about 1:2 and 1:100, or 1:5 and 1:50, or 1:5 and 1:10.

The textured surface can have a profile feature and/or flat area with a dimension within the micrometer range of dimensions. A textured surface can have a profile feature and/or flat area with a dimension of about 1 micrometer to about 500 micrometers. All of the dimensions of the profile feature (e.g., length, width, height, diameter, depending on the geometry) can be in the micrometer range, e.g., from about 1 micrometer to about 500 micrometers. The textured surface can have a plurality of profile features having dimensions that are from about 1 micrometer to about 500 micrometer. In this context, the phrase "plurality of the profile features" is meant to mean that about 50 percent or more, about 60 percent or more, about 70 percent or more, about 80 percent or more, about 90 percent or more, or about 99 percent or more of the profile features have a dimension in this range. The height of the profile features (or depth if depressions) can be about 0.1 and 50 micrometers, about 1 to 5 micrometers, or 2 to 3 micrometers. The profile features can have a ratio of width:height and/or length:height dimensions of about 1:2 and 1:100, or 1:5 and 1:50, or 1:5 and 1:10.

A textured surface can have a plurality of profile features having a mixture of size dimensions within the nanometer to micrometer range (*e.g.,* a portion of the profile features are on the nanometer scale and a portion of the profile features are on the micrometer scale). A textured surface can have a plurality of profile features having a mixture of dimensional ratios. The textured surface can have a profile feature having one or more nanometer-scale projections or depressions on a micrometer-scale projection or depression.

The profile feature can have height and width dimensions that are within a factor of three of each other ($0.33w \le h \le 3w$ where w is the width and h is the height of the profile feature) and/or height and length dimensions that are within a factor of three of each other ($0.33l \le h \le 3l$ where l is the length and h is the height of the profile feature). The profile feature can have a ratio of length:width that is from about 1:3 to about 3:1, or about 1:2 to about 2:1, or about 1:1.5 to about 1.5:1, or about 1:1.2 to about 1.2:1, or about 1:1. The width and length of the profile features can be substantially the same or different.

It should be stated that while the broad range of the dimensions of the profile features and protrusions and indentations overlap, these dimensions would not overlap in a particular application. The one or more of the dimensions of the protrusions and indentations would be a factor of 10, 15, 20, 50 or 100 or more than one or more of the dimensions of the profile features.

In another aspect, the textured surface can have a profile feature and/or flat area with at least one dimension in the mid-micrometer range and higher (e.g., greater than 500 micrometers). The profile feature can have at least one dimension (e.g., the largest dimension such as length, width, height, diameter, and the like depending upon the geometry or shape of the profile feature) of greater than 500 micrometers, greater than 600 micrometers, greater than 700 micrometers, greater than 800 micrometers, greater than 900 micrometers, greater than 1000 micrometers, greater than 2 millimeters, greater than 10 millimeters, or more. For example, the largest dimension of the profile feature can range from about 600 micrometers to about 2000 micrometers, or about 650 micrometers to about 1500 micrometers, or about 700 micrometers to about 1000 micrometers. At least one or more of the dimensions of the profile feature (e.g., length, width, height, diameter, depending on the geometry) can be in the micrometer range, while one or more of the other dimensions can be in the nanometer to micrometer range (e.g., less than 500 micrometers, less than 100 micrometers, less than 10 micrometers, or less than 1 micrometer). The textured surface can have a plurality of profile features having at least one dimension that is in the mid-micrometer or more range (e.g., 500 micrometers or more). In this context, the phrase "plurality of the profile features" is meant to mean that about 50 percent or more, about 60 percent or more, about 70 percent or more, about 80 percent or more, about 90 percent or more, or about 99 percent or more of the profile features have at least one dimension that is greater than 500 micrometers. In particular, at least one of the length and width of the profile feature is greater than 500 micrometers or both the length and the width of the profile feature is greater than 500 micrometers. In another example, the diameter of the profile feature is greater than 500 micrometers. In another example, when the profile feature is an irregular shape, the longest dimension is greater than 500 micrometers.

In aspects, the height of the profile features can be greater than 50 micrometers. In this context, the phrase "plurality of the profile features" is meant to mean that about 50 percent or more, about 60 percent or more, about 70 percent or more, about 80 percent or more, about 90 percent or more, or about 99 percent or more of the profile features have at height that is greater than 50 micrometers. The height of the profile feature can be 50 micrometers, about 60 micrometers, about 70 micrometers, about 80 micrometers, about 90 micrometers, or about 100 micrometers to about 60 micrometers, about 70 micrometers, about 80 micrometers, about 90 micrometers, about 100 micrometers, about 150 micrometers, about 250 micrometers, about 500 micrometers or more. For example, the ranges can include 50 micrometers to 500 micrometers, about 60 micrometers to 250 micrometers, about 60 micrometers to about 150 micrometers, and the like. One or more of the other dimensions (e.g., length, width, diameter, or the like) can be in the nanometer to micrometer range (e.g., less than 500 micrometers, less than 100 micrometers, less than 10 micrometers, or less than 1 micrometer). In particular, at least one of the length and width of the profile feature is less than 500 micrometers or both the length and the width of the profile feature is less than 500 micrometers, while the height is greater than 50 micrometers. One or more of the other dimensions (e.g., length, width, diameter, or the like) can be in the micrometer to millimeter range (e.g., greater than 500 micrometers to 10 millimeters).

The dimension (e.g., length, width, height, diameter, depending upon the shape of the profile feature) of each profile feature can be within the nanometer to micrometer range. The textured surface can have a profile feature and/or flat area with a dimension of about 10 nanometers to about 500 micrometers or higher (e.g., about 1 millimeter, about 2 millimeters, about 5 millimeters, or about 10 millimeters). At least one of the dimensions of the profile feature (e.g., length, width, height, diameter, depending on the geometry) can be in the nanometer range (e.g., from about 10 nanometers to about 1000 nanometers), while at least one other dimension (e.g., length, width, height, diameter, depending on the geometry) can be in the micrometer range (e.g., 5 micrometers to 500 micrometers or more (e.g., about 1 to 10 millimeters)). The textured surface can have a plurality of profile features having at least one dimension in the nanometer range (e.g., about 10 to 1000 nanometers) and the other in the micrometer range (e.g., 5 micrometers to 500 micrometers or more). In this context, the phrase "plurality of the profile features" is meant to mean that about 50 percent or more, about 60 percent or more, about 70 percent or more, about 80 percent or more, about 90 percent or more, or about 99 percent or more of the profile features have at least one dimension in the nanometer range and at least one dimension in the micrometer range. In particular, at least one of the length and width of the profile feature is in the nanometer range, while the other of the length and the width of the profile feature is in the micrometer range.

In aspects, the height of the profile features can be greater than 250 nanometers. In this context, the phrase "plurality of the profile features" is meant to mean that about 50 percent or more, about 60 percent or more, about 70 percent or more, about 80 percent or more, about 90 percent or more, or about 99 percent or more of the profile features have at height that is greater than 250 nanometers. The height of the profile feature can be 250 nanometers, about 300 nanometers, about 400 nanometers, or about 500 nanometers, to about 300 nanometers, about 400 nanometers, about 500 nanometers, or about 1000 nanometers or more. For example, the range can be 250 nanometers to about 1000 nanometers, about 300 nanometers to 500 nanometers, about 400 nanometers to about 1000 nanometers, and the like. One or more of the other dimensions (e.g., length, width, diameter, or the like) can be in the micrometer to millimeter range (e.g., greater than 500 micrometers to 10 millimeters). In particular, at least one of the length and width of the profile feature is in the nanometer range (e.g., about 10 to 1000 nanometers) and the other in the micrometer range (e.g., 5 micrometers to 500 micrometers or more), while the height is greater than 250 nanometers.

The profile features can have a certain spatial arrangement. The spatial arrangement of the profile features may be uniform, such as spaced evenly apart or forming a pattern. The spatial arrangement can be random. Adjacent profile features can be about 10 to 500 nanometers apart, about 100 to 1000 nanometers apart, about 1 to 100 micrometers apart or about 5 to 100 micrometers apart. Adjacent profile features can overlap one another or be adjacent one another so little or no flat regions are positioned there between. The desired spacing can depend, at least in part, on the size and/or shape of the profile structures and the desired structural color effect.

The profile features can have a certain cross-sectional shape (with respect to a plane parallel the first plane). The textured surface can have a plurality of profile features having the same or similar cross-sectional shape. The textured surface has a plurality of profile features having a mixture of different cross-sectional shapes. The cross-sectional shapes of the profile features can include polygonal (*e.g.,* square or triangle or rectangle cross section), circular, semi-circular, tubular, oval, random, high and low aspect ratios, overlapping profile features, and the like.

The profile feature (*e.g.,* about 10 nanometers to 500 micrometers) can include an upper, flat surface. The profile feature (*e.g.,* about 10 nanometers to 500 micrometers) can include an upper, concavely curved surface. The concave curved surface may extend symmetrically either side of an uppermost point. The concave curved surface may extend symmetrically across only 50 percent of the uppermost point. The profile feature (e.g., about 10 nanometers to 500 micrometers) can include an upper, convexly curved surface. The curved surface may extend symmetrically either side of an uppermost point. The curved surface may extend symmetrically across only 50 percent of the uppermost point.

The profile feature can include protrusions from the textured surface. The profile feature can include indents (hollow areas) formed in the textured surface. The profile feature can have a smooth, curved shape (*e.g.,* a polygonal cross-section with curved corners).

The profile features (whether protrusions or depressions) can be approximately conical or frusto-conical (*i.e.* the projections or indents may have horizontally or diagonally flattened tops) or have an approximately part-spherical surface (*e.g.,* a convex or concave surface respectively having a substantially even radius of curvature).

The profile features may have one or more sides or edges that extend in a direction that forms an angle to the first plane of the textured surface. The angle between the first plane and a side or edge of the profile feature is about 45 degrees or less, about 30 degrees or less, about 25 degrees or less, or about 20 degrees or less. The one or more sides or edges may extend in a linear or planar orientation, or may be curved so that the angle changes as a function of distance from the first plane. The profile features may have one or more sides that include step(s) and/or flat side(s). The profile feature can have one or more sides (or portions thereof) that can be orthogonal or perpendicular to the first plane of the textured surface, or extend at an angle of about 10 degrees to 89 degrees to the first plane (90 degrees being perpendicular or orthogonal to the first plane)). The profile feature can have a side with a stepped configuration, where portions of the side can be parallel to the first plane of the textured surface or have an angle of about 1 degrees to 179 degrees (0 degrees being parallel to the first plane)).

The textured surface can have profile features with varying shapes (*e.g.,* the profile features can vary in shape, height, width and length among the profile features) or profile features with substantially uniform shapes and/or dimensions. The structural color produced by the textured surface can be determined, at least in part, by the shape, dimensions, spacing, and the like, of the profile features.

The profile features can be shaped so as to result in a portion of the surface (*e.g.,* about 25 to 50 percent or more) being about normal to the incoming light when the light is incident at the normal to the first plane of the textured surface. The profile features can be shaped so as to result in a portion of the surface (*e.g.,* about 25 to 50 percent or more) being about normal to the incoming light when the light is incident at an angle of up to 45 degrees to the first plane of the textured surface.

The spatial orientation of the profile features on the textured surface can be used to produce the structural color, or to effect the degree to which the structural color shifts at different viewing angles. The spatial orientation of the profile features on the textured surface can be random, a semi-random pattern, or in a set pattern. A set pattern of profile features is a known set up or configuration of profile features in a certain area (e.g., about 50 nanometers squared to about 10 millimeters squared depending upon the dimensions of the profile features (e.g., any increment between about 50 nanometers and about 10 millimeters is included)). A semi-random pattern of profile features is a known set up of profile features in a certain area (e.g., about 50 nanometers squared to 10 millimeters squared) with some deviation (e.g., 1 to 15% deviation from the set pattern), while random profile features are present in the area but the pattern of profile features is discernable. A random spatial orientation of the profile features in an area produces no discernable pattern in a certain area, (e.g., about 50 nanometers squared to 10 millimeters squared).

The spatial orientation of the profile features can be periodic (e.g., full or partial) or non-periodic. A periodic spatial orientation of the profile features is a recurring pattern at intervals. The periodicity of the periodic spatial orientation of the profile features can depend upon the dimensions of the profile features but generally are periodic from about 50 nanometers to 100 micrometers. For example, when the dimensions of the profile features are submicron, the periodicity of the periodic spatial orientation of the profile features can be in the 50 to 500 nanometer range or 100 to 1000 nanometer range. In another example, when the dimensions of the profile features are at the micron level, the periodicity of the periodic spatial orientation of the profile features can be in the 10 to 500 micrometer range or 10 to 1000 micrometer range. Full periodic pattern of profile features indicates that the entire pattern exhibits periodicity, whereas partial periodicity indicates that less than all of the pattern exhibits periodicity (e.g., about 70-99 percent of the periodicity is retained). A non-periodic spatial orientation of profile features is not periodic and does not show periodicity based on the dimensions of the profile features, in particular, no periodicity in the 50 to 500 nanometer range or 100 to 1000 nanometer range where the dimensions are of the profile features are submicron or no periodicity in the 10 to 500 micrometer range or 10 to 1000 micrometer range where the dimensions are of the profile features are in the micron range.

In an aspect, the spatial orientation of the profile features on the textured surface can be set to reduce distortion effects, *e.g.,* caused by the interference of one profile feature with another in regard to the structural color of the article. Since the shape, dimension, relative orientation of the profile features can vary considerably across the textured surface, the desired spacing and/or relative positioning for a particular area (*e.g.,* in the micrometer range or about 1 to 10 square micrometers) having profile features can be appropriately determined. As discussed herein, the shape, dimension, relative orientation of the profile features affect the contours of the reflective layer(s) and/or constituent layer(s), so the dimensions (e.g., thickness), index of refraction, number of layers in the optical unit (e.g., reflective layer(s) and constituent layer(s)) are considered when designing the textured side of the texture layer.

The profile features are located in nearly random positions relative to one another across a specific area of the textured surface (*e.g.,* in the micrometer range or about 1 to 10 square micrometers to centimeter range or about 0.5 to 5 square centimeters, and all range increments therein), where the randomness does not defeat the purpose of producing the structural color. In other words, the randomness is consistent with the spacing, shape, dimension, and relative orientation of the profile features, the dimensions (*e.g.,* thickness), index of refraction, and number of layers (e.g., the reflective layer(s), the constituent layer(s), and the like, with the goal to achieve the structural color.

The profile features are positioned in a set manner relative to one another across a specific area of the textured surface to achieve the purpose of producing the structural color. The relative positions of the profile features do not necessarily follow a pattern, but can follow a pattern consistent with the desired structural color. As mentioned above and herein, various parameters related to the profile features, flat areas, and reflective layer(s) and/or the constituent layer can be used to position the profile features in a set manner relative to one another.

The textured surface can include micro and/or nanoscale profile features that can form gratings (*e.g.*, a diffractive grating), photonic crystal structure, a selective mirror structure, crystal fiber structures, deformed matrix structures, spiraled coiled structures, surface grating structures, and combinations thereof. The textured surface can include micro and/or nanoscale profile features that form a grating having a periodic or non-periodic design structure to impart the structural color. The micro and/or nanoscale profile features can have a peak-valley pattern of profile features and/or flat areas to produce the desired structural color. The grading can be an Echelette grating.

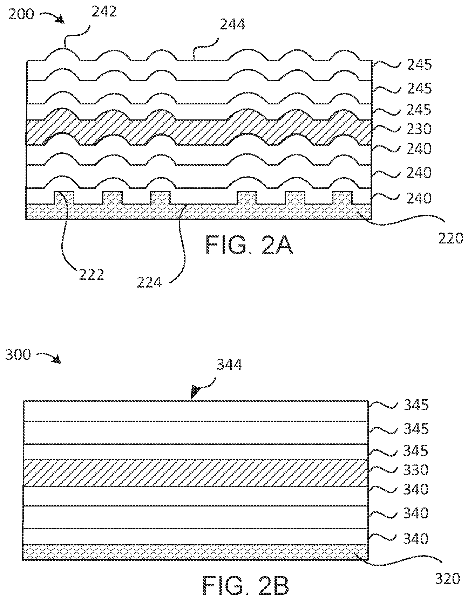

The profile features and the flat areas of the textured surface in the optical unit can appear as topographical undulations in each layer (e.g., reflective layer(s) and/or the constituent layer(s)). For example, referring to FIG. 2A, an optical unit 200 includes a textured structure 220 having a plurality of profile features 222 and flat areas 224. As described herein, one or more of the profile features 222 can be projections from a surface of the textured structure 220, and/or one or more of the profile features can be depressions in a surface of the textured structure 220 (not shown). One or more constituent layers 240 are disposed on the textured structure 220 and then a reflective layer 230 and one or more constituent layers 245 are disposed on the preceding layers. Adjacent layers (constituent layers and reflective layer) are made of different types of materials. In some embodiments, the resulting topography of the textured structure 220 and the one or more constituent layers 240 and 245 and the reflective layer 230 are not identical, but rather, the one or more constituent layers 240 and 245 and the reflective layer 230 can have elevated or depressed regions 242 which are either elevated or depressed relative to the height of the planar regions 244 and which roughly correspond to the location of the profile features 222 of the textured structure 220. The one or more constituent layers 240 and 245 and the reflective layer 230 have planar regions 244 that roughly correspond to the location of the flat areas 224 of the textured structure 220. Due to the presence of the elevated or depressed regions 242 and the planar regions 244, the resultant overall topography of the one or more constituent layers 240 and 245 and the reflective layer 230 can be that of an undulating or wave-like structure. The dimension, shape, and spacing of the profile features along with the number of layers of the constituent layer, the reflective layer, the thickness of each of the layers, refractive index of each layer, and the type of material, can be used to produce an optical unit which results in a particular structural color.

While the textured surface can produce the structural color in some embodiments, or can affect the degree to which the structural color shifts at different viewing angles, in other embodiments, a "textured surface" or surface with texture may not produce the structural color, or may not affect the degree to which the structural color shifts at different viewing angles. The structural color can be produced by the design of the optical unit with or without the textured surface. As a result, the optical unit can include the textured surface having profile elements of dimensions in the nanometer to millimeter range, but the structural color or the shifting of the structural color is not attributable to the presence or absence of the textured surface. In other words, the optical unit imparts the same structural color where or not the textured surface is present The design of the textured surface can be configured to not affect the structural color imparted by the optical unit, or not affect the shifting of the structural color imparted by the optical unit. The shape of the profile features, dimensions of the shapes, the spatial orientation of the profile features relative to one another, and the like can be selected so that the textured surface does not affect the structural color attributable to the optical unit.

In another embodiment, the structural color can be imparted by the optical unit without the textured surface. The surface of the layers of the optical unit are substantially flat (or substantially three dimensional flat planar surface) or flat (or three dimensional flat planar surface) at the microscale (e.g., about 1 to 500 micrometers) and/or nanoscale (e.g., about 50 to 500 nanometers). In regard to substantially flat or substantially planar the surface can include some minor topographical features (e.g., nanoscale and/or microscale) such as those that might be caused due to unintentional imperfections, slight undulations that are unintentional, other topographical features (e.g., extensions above the plane of the layer or depressions below or into the plane of the layer) caused by the equipment and/or process used and the like that are unintentionally introduced. The topographical features do not resemble profile features of the textured surface. In addition, the substantially flat (or substantially three dimensional flat planar surface) or flat (or three dimensional flat planar surface) may include curvature as the dimensions of the optical unit increase, for example about 500 micrometers or more, about 10 millimeter or more, about 10 centimeters or more, depending upon the dimensions of the optical unit, as long as the surface is flat or substantially flat and the surface only includes some minor topographical features.

FIG. 2B is a transverse cross-section illustration of a substantially flat (or substantially three-dimensional flat planar surface) or flat (or three-dimensional flat planar surface) optical unit 300. The optical unit 300 includes one or more constituent layers 340 are disposed on the flat or three-dimensional flat planar surface structure 320 and then a reflective layer 330 and one or more constituent layers 345 are disposed on the preceding layers. Adjacent layers (constituent layers and reflective layer) are made of different types of materials. The material that makes up the constituent layers and the reflective layer, number of layers of the constituent layer, the reflective layer, the thickness of each of the layers, refractive index of each layer, and the like, can produce an optical unit which results in a particular structural color.

In an aspect, the surface of the article is a textured surface and the optical unit is on the textured surface. Reference to "structural color" includes the first structural color, second structural color, third or more structural colors, and any combination of these. A hue of the structural color, an intensity of the structural color, a viewing angle at which the structural color is visible, or any combination thereof, can be altered by the textured surface (or optionally the textured surface does not alter any one or a combination of these), as determined by comparing the optical unit comprising the textured surface of a substantially identical optical unit (e.g., material used, thickness, and the like) on a surface of a substantially identical article (e.g., material used, design, and the like) which is free of the textured surface.

In an aspect, the surface of the article is a textured surface and the optical unit is on the textured surface. The textured surface reduces (e.g., by about 80% to 99%, about 85 to 99%, about 90 to 99%, about 95 to 99%, or about 98 to 99%) or eliminates shift of the structural color as a viewing angle is varied from a first viewing angle to a second viewing angle, as compared to a substantially identical optical unit (e.g., material used, thickness, and the like) on a surface of a substantially identical article (e.g., material used, design, and the like) which is free of the texture.

In an aspect, the surface of the article is a textured surface and the optical unit is on the textured surface. A hue of the structural color, an intensity of the structural color, a viewing angle at which the structural color is visible, or any combination thereof, is unaffected by or substantially unaffected (e.g., affected by about 1% or less, about 0.1 to 2%, about 0.1 to 3%, about 0.1 to 5%, or about 0.1 to 7.5%) by the textured surface, as determined by comparing the optical unit comprising the textured surface to a substantially identical optical unit (e.g., material used, thickness, and the like) on a surface of a substantially identical article (e.g., material used, design, and the like) which is free of the textured surface.

In an aspect, the surface of the article is a textured surface and the optical unit is on the textured surface. The shift of the structural color is unaltered by or substantially the same (e.g., by about 80% to 99%, about 85 to 99%, about 90 to 99%, about 95 to 99%, or about 98 to 99% the same) as a viewing angle is varied from a first viewing angle to a second viewing angle, as compared to a substantially identical optical unit (e.g., material used, thickness, and the like) on a surface of a substantially identical article (e.g., material used, design, and the like) which is free of the textured surface.

In an aspect, the textured surface includes a plurality of profile features and flat planar areas, where the profile features extend above the flat areas of the textured surface. The dimensions of the profile features, a shape of the profile features, a spacing among the plurality of the profile features, or any combination thereof, in combination with the optical unit, affect a hue of the structural color, an intensity of the structural color, a viewing angle at which the structural color is visible, shift of the structural color as a viewing angle is varied from a first viewing angle to a second viewing angle, or any combination thereof.

In an aspect, a hue of the structural color, an intensity of the structural color, a viewing angle at which the structural color is visible, shift of the structural color as a viewing angle is varied from a first viewing angle to a second viewing angle, or any combination thereof, are unaffected or substantially unaffected (e.g., affected by about 1% or less, about 0.1 to 2%, about 0.1 to 3%, about 0.1 to 5%, or about 0.1 to 7.5%) by dimensions of the profile features, a shape of the profile features, a spacing among the plurality of the profile features, or any combination thereof, of the textured surface.

In an aspect, the profile features of the textured surface are in random positions relative to one another within a specific area. The spacing between the profile features, in combination with the optical unit, affects a hue of the structural color, an intensity of the structural color, a viewing angle at which the structural color is visible, shift of the structural color as a viewing angle is varied from a first viewing angle to a second viewing angle, or any combination thereof.

In an aspect, a hue of the structural color, an intensity of the structural color, a viewing angle at which the structural color is visible, shift of the structural color as a viewing angle is varied from a first viewing angle to a second viewing angle, or any combination thereof, is unaffected by, or substantially unaffected (e.g., affected by about 1% or less, about 0.1 to 2%, about 0.1 to 3%, about 0.1 to 5%, or about 0.1 to 7.5%) by, spacing between the profile features

in combination with the optical unit.

In an aspect, the profile features and the flat areas result in at least one layer of the optical unit having an undulating topography across the textured surface and where there is a planar region between neighboring profile features that is planar with the flat planar areas of the textured surface.

In an aspect, the dimensions of the planar region relative to the profile features affect a hue of the structural color, an intensity of the structural color, a viewing angle at which the structural color is visible, shift of the structural color as a viewing angle is varied from a first viewing angle to a second viewing angle, or any combination thereof.

In an aspect, a hue of the structural color, an intensity of the structural color, a viewing angle at which the structural color is visible, shift of the structural color as a viewing angle is varied from a first viewing angle to a second viewing angle, or any combination thereof, is unaffected by or substantially unaffected (e.g., affected by about 1% or less, about 0.1 to 2%, about 0.1 to 3%, about 0.1 to 5%, or about 0.1 to 7.5%) by dimensions of the planar region relative to the profile features.

In an aspect, the profile features and the flat areas result in each layer of the optical unit having an undulating topography across the textured surface. The undulating topography of the optical unit affects a hue of the structural color, an intensity of the structural color, a viewing angle at which the structural color is visible, shift of the structural color as a viewing angle is varied from a first viewing angle to a second viewing angle, or any combination thereof. A hue of the structural color, an intensity of the structural color, a viewing angle at which the structural color is visible, shift of the structural color as a viewing angle is varied from a first viewing angle to a second viewing angle, or any combination thereof, is unaffected by or substantially unaffected (e.g., affected by about 1% or less, about 0.1 to 2%, about 0.1 to 3%, about 0.1 to 5%, or about 0.1 to 7.5%) by the undulating topography of the optical unit.

Additional details are provided regarding the polymeric materials referenced herein for example, the polymers described in reference to the article, components of the article, structures, layers, films, bladders, foams, coating, and like the. The polymer can be a thermoset polymer or a thermoplastic polymer. The polymer can be an elastomeric polymer, including an elastomeric thermoset polymer or an elastomeric thermoplastic polymer. The polymer can be selected from: polyurethanes (including elastomeric polyurethanes, thermoplastic polyurethanes (TPUs), and elastomeric TPUs), polyesters, polyethers, polyamides, vinyl polymers (e.g., copolymers of vinyl alcohol, vinyl esters, ethylene, acrylates, methacrylates, styrene, and so on), polyacrylonitriles, polyphenylene ethers, polycarbonates, polyureas, polystyrenes, co-polymers thereof (including polyester-polyurethanes, polyether-polyurethanes, polycarbonate-polyurethanes, polyether block polyamides (PEBAs), and styrene block copolymers), and any combination thereof, as described herein. The polymer can include one or more polymers selected from the group consisting of polyesters, polyethers, polyamides, polyurethanes, polyolefins copolymers of each, and combinations thereof.

The term "polymer" refers to a chemical compound formed of a plurality of repeating structural units referred to as monomers. Polymers often are formed by a polymerization reaction in which the plurality of structural units become covalently bonded together. When the monomer units forming the polymer all have the same chemical structure, the polymer is a homopolymer. When the polymer includes two or more monomer units having different chemical structures, the polymer is a copolymer. One example of a type of copolymer is a terpolymer, which includes three different types of monomer units. The co-polymer can include two or more different monomers randomly distributed in the polymer (e.g., a random co-polymer). Alternatively, one or more blocks containing a plurality of a first type of monomer can be bonded to one or more blocks containing a plurality of a second type of monomer, forming a block copolymer. A single monomer unit can include one or more different chemical functional groups.

Polymers having repeating units which include two or more types of chemical functional groups can be referred to as having two or more segments. For example, a polymer having repeating units of the same chemical structure can be referred to as having repeating segments. Segments are commonly described as being relatively harder or softer based on their chemical structures, and it is common for polymers to include relatively harder segments and relatively softer segments bonded to each other in a single monomeric unit or in different monomeric units. When the polymer includes repeating segments, physical interactions or chemical bonds can be present within the segments or between the segments or both within and between the segments. Examples of segments often referred to as hard segments include segments including a urethane linkage, which can be formed from reacting an isocyanate with a polyol to form a polyurethane. Examples of segments often referred to as soft segments include segments including an alkoxy functional group, such as segments including ether or ester functional groups, and polyester segments. Segments can be referred to based on the name of the functional group present in the segment (e.g., a polyether segment, a polyester segment), as well as based on the name of the chemical structure which was reacted in order to form the segment (e.g., a polyol-derived segment, an isocyanate-derived segment). When referring to segments of a particular functional group or of a particular chemical structure from which the segment was derived, it is understood that the polymer can contain up to 10 mole percent of segments of other functional groups or derived from other chemical structures. For example, as used herein, a polyether segment is understood to include up to 10 mole percent of non-polyether segments.

As previously described, the polymer can be a thermoplastic polymer. In general, a thermoplastic polymer softens or melts when heated and returns to a solid state when cooled. The thermoplastic polymer transitions from a solid state to a softened state when its temperature is increased to a temperature at or above its softening temperature, and a liquid state when its temperature is increased to a temperature at or above its melting temperature. When sufficiently cooled, the thermoplastic polymer transitions from the softened or liquid state to the solid state. As such, the thermoplastic polymer may be softened or melted, molded, cooled, re-softened or re-melted, re-molded, and cooled again through multiple cycles. For amorphous thermoplastic polymers, the solid state is understood to be the "rubbery" state above the glass transition temperature of the polymer. The thermoplastic polymer can have a melting temperature from about 90 degrees C to about 190 degrees C when determined in accordance with ASTM D3418-97 as described herein below, and includes all subranges therein in increments of 1 degree. The thermoplastic polymer can have a melting temperature from about 93 degrees C to about 99 degrees C when determined in accordance with ASTM D3418-97 as described herein below. The thermoplastic polymer can have a melting temperature from about 112 degrees C to about 118 degrees C when determined in accordance with ASTM D3418-97 as described herein below.

The glass transition temperature is the temperature at which an amorphous polymer transitions from a relatively brittle "glassy" state to a relatively more flexible "rubbery" state. The thermoplastic polymer can have a glass transition temperature from about -20 degrees C to about 30 degrees C when determined in accordance with ASTM D3418-97 as described herein below. The thermoplastic polymer can have a glass transition temperature (from about -13 degree C to about -7 degrees C when determined in accordance with ASTM D3418-97 as described herein below. The thermoplastic polymer can have a glass transition temperature from about 17 degrees C to about 23 degrees C when determined in accordance with ASTM D3418-97 as described herein below.

The thermoplastic polymer can have a melt flow index from about 10 to about 30 cubic centimeters per 10 minutes (cm3/10 min) when tested in accordance with ASTM D1238-13 as described herein below at 160 degrees C using a weight of 2.16 kilograms (kg). The thermoplastic polymer can have a melt flow index from about 22 cm3/10 min to about 28 cm3/10 min when tested in accordance with ASTM D1238-13 as described herein below at 160 degrees C using a weight of 2.16 kg.

The thermoplastic polymer can have a cold Ross flex test result of about 120,000 to about 180,000 cycles without cracking or whitening when tested on a thermoformed plaque of the thermoplastic polymer in accordance with the cold Ross flex test as described herein below. The thermoplastic polymer can have a cold Ross flex test result of about 140,000 to about 160,000 cycles without cracking or whitening when tested on a thermoformed plaque of the thermoplastic polymer in accordance with the cold Ross flex test as described herein below.

The thermoplastic polymer can have a modulus from about 5 megaPascals (MPa) to about 100 MPa when determined on a thermoformed plaque in accordance with ASTM D412-98 Standard Test Methods for Vulcanized Rubber and Thermoplastic Rubbers and Thermoplastic Elastomers-Tension with modifications described herein below. The thermoplastic polymer can have a modulus from about 20 MPa to about 80 MPa when determined on a thermoformed plaque in accordance with ASTM D412-98 Standard Test Methods for Vulcanized Rubber and Thermoplastic Rubbers and Thermoplastic Elastomers-Tension with modifications described herein below.

The polymer can be a thermoset polymer. As used herein, a "thermoset polymer" is understood to refer to a polymer which cannot be heated and melted, as its melting temperature is at or above its decomposition temperature. A "thermoset material" refers to a material which comprises at least one thermoset polymer. The thermoset polymer and/or thermoset material can be prepared from a precursor (e.g., an uncured or partially cured polymer or material) using thermal energy and/or actinic radiation (e.g., ultraviolet radiation, visible radiation, high energy radiation, infrared radiation) to form a partially cured or fully cured polymer or material which no longer remains fully thermoplastic. In some cases, the cured or partially cured polymer or material may remain thermoelastic properties, in that it is possible to partially soften and mold the polymer or material at elevated temperatures and/or pressures, but it is not possible to melt the polymer or material. The curing can be promoted, for example, with the use of high pressure and/or a catalyst. In many examples, the curing process is irreversible since it results in cross-linking and/or polymerization reactions of the precursors. The uncured or partially cured polymers or materials can be malleable or liquid prior to curing. In some cases, the uncured or partially cured polymers or materials can be molded into their final shape, or used as adhesives. Once hardened, a thermoset polymer or material cannot be re-melted in order to be reshaped. The textured surface can be formed by partially or fully curing an uncured precursor material to lock in the textured surface.

Polyurethane

The polymer can be a polyurethane, such as a thermoplastic polyurethane (also referred to as "TPU"). Alternatively, the polymer can be a thermoset polyurethane. Additionally, polyurethane can be an elastomeric polyurethane, including an elastomeric TPU or an elastomeric thermoset polyurethane. The elastomeric polyurethane can include hard and soft segments. The hard segments can comprise or consist of urethane segments (e.g., isocyanate-derived segments). The soft segments can comprise or consist of alkoxy segments (e.g., polyol-derived segments including polyether segments, or polyester segments, or a combination of polyether segments and polyester segments). The polyurethane can comprise or consist essentially of an elastomeric polyurethane having repeating hard segments and repeating soft segments.

One or more of the polyurethanes can be produced by polymerizing one or more isocyanates with one or more polyols to produce polymer chains having carbamate linkages. The portions of the polyurethane polymer chain formed by the segments derived from isocyanates can be referred to as the hard segments, while the portions derived from polyols can be referred to as soft segments. Optionally,the isocyanates can also be chain extended with one or more chain extenders to bridge two or more isocyanates, increasing the length of the hard segments.

Examples of suitable aliphatic diisocyanates for producing the polyurethane polymer chains include hexamethylene diisocyanate (HDI), isophorone diisocyanate (IPDI), butylenediisocyanate (BDI), bisisocyanatocyclohexylmethane (HMDI), 2,2,4-trimethylhexamethylene diisocyanate (TMDI), bisisocyanatomethylcyclohexane, bisisocyanatomethyltricyclodecane, norbornane diisocyanate (NDI), cyclohexane diisocyanate (CHDI), 4,4'-dicyclohexylmethane diisocyanate (H12MDI), diisocyanatododecane, lysine diisocyanate, and combinations thereof.

The isocyanate-derived segments can include segments derived from aliphatic diisocyanate. A majority of the isocyanate-derived segments can comprise segments derived from aliphatic diisocyanates. At least 90% of the isocyanate-derived segments are derived from aliphatic diisocyanates. The isocyanate-derived segments can consist essentially of segments derived from aliphatic diisocyanates. The aliphatic diisocyanate-derived segments can be derived substantially (e.g., about 50 percent or more, about 60 percent or more, about 70 percent or more, about 80 percent or more, about 90 percent or more) from linear aliphatic diisocyanates. At least 80% of the aliphatic diisocyanate-derived segments can be derived from aliphatic diisocyanates that are free of side chains. The segments derived from aliphatic diisocyanates can include linear aliphatic diisocyanates having from 2 to 10 carbon atoms.

Examples of suitable aromatic diisocyanates for producing the polyurethane polymer chains include toluene diisocyanate (TDI), TDI adducts with trimethyloylpropane (TMP), methylene diphenyl diisocyanate (MDI), xylene diisocyanate (XDI), tetramethylxylylene diisocyanate (TMXDI), hydrogenated xylene diisocyanate (HXDI), naphthalene 1,5-diisocyanate (NDI), 1,5-tetrahydronaphthalene diisocyanate, para-phenylene diisocyanate (PPDI), 3,3' -dimethyldipheny1-4, 4' -diisocyanate (DDDI), 4,4 '-dibenzyl diisocyanate (DBDI), 4-chloro-1,3-phenylene diisocyanate, and combinations thereof. The polymer chains can be substantially free of aromatic groups.

The polyurethane polymer chains can be produced from diisocyanates including HMDI, TDI, MDI, H12 aliphatics, and combinations thereof. For example, the polyurethane can comprise one or more polyurethane polymer chains produced from diisocyanates including HMDI, TDI, MDI, H12 aliphatics, and combinations thereof.

Polyurethane chains which are at least partially crosslinked or which can be crosslinked, can be used in accordance with the present disclosure. It is possible to produce crosslinked or crosslinkable polyurethane chains by reacting multi-functional isocyanates to form the polyurethane. Examples of suitable triisocyanates for producing the polyurethane chains include TDI, HDI, and IPDI adducts with trimethyloylpropane (TMP), uretdiones (i.e., dimerized isocyanates), polymeric MDI, and combinations thereof.

Polyamides

The polymer can comprise a polyamide, such as a thermoplastic polyamide, or a thermoset polyamide. The polyamide can be an elastomeric polyamide, including an elastomeric thermoplastic polyamide or an elastomeric thermoset polyamide. The polyamide can be a polyamide homopolymer having repeating polyamide segments of the same chemical structure. Alternatively, the polyamide can comprise a number of polyamide segments having different polyamide chemical structures (e.g., polyamide 6 segments, polyamide 11 segments, polyamide 12 segments, polyamide 66 segments, etc.). The polyamide segments having different chemical structure can be arranged randomly, or can be arranged as repeating blocks.

The polyamide can be a co-polyamide (i.e., a co-polymer including polyamide segments and non-polyamide segments). The polyamide segments of the co-polyamide can comprise or consist of polyamide 6 segments, polyamide 11 segments, polyamide 12 segments, polyamide 66 segments, or any combination thereof. The polyamide segments of the co-polyamide can be arranged randomly, or can be arranged as repeating segments. The polyamide segments can comprise or consist of polyamide 6 segments, or polyamide 12 segments, or both polyamide 6 segment and polyamide 12 segments. In the example where the polyamide segments of the co-polyamide include of polyamide 6 segments and polyamide 12 segments, the segments can be arranged randomly. The non-polyamide segments of the co-polyamide can comprise or consist of polyether segments, polyester segments, or both polyether segments and polyester segments. The co-polyamide can be a block co-polyamide, or can be a random co-polyamide. The copolyamide can be formed from the polycondensation of a polyamide oligomer or prepolymer with a second oligomer prepolymer to form a copolyamide (i.e., a co-polymer including polyamide segments. Optionally, the second prepolymer can be a hydrophilic prepolymer.

The polyamide can be a polyamide-containing block co-polymer. For example, the block co-polymer can have repeating hard segments, and repeating soft segments. The hard segments can comprise polyamide segments, and the soft segments can comprise non-polyamide segments. The polyamide-containing block co-polymer can be an elastomeric co-polyamide comprising or consisting of polyamide-containing block co-polymers having repeating hard segments and repeating soft segments. In block co-polymers, including block co-polymers having repeating hard segments and soft segments, physical crosslinks can be present within the segments or between the segments or both within and between the segments.

The polyamide itself, or the polyamide segment of the polyamide-containing block co-polymer can be derived from the condensation of polyamide prepolymers, such as lactams, amino acids, and/or diamino compounds with dicarboxylic acids, or activated forms thereof. The resulting polyamide segments include amide linkages (-(CO)NH-). The term "amino acid" refers to a molecule having at least one amino group and at least one carboxyl group. Each polyamide segment of the polyamide can be the same or different.

The polyamide or the polyamide segment of the polyamide-containing block co-polymer can be derived from the polycondensation of lactams and/or amino acids.

The polyamide can be a thermoplastic polyamide and the constituents of the polyamide block and their proportion can be chosen in order to obtain a melting temperature of less than 150 degrees C, such as a melting point of from about 90 degrees C to about 135 degrees C. The various constituents of the thermoplastic polyamide block and their proportion can be chosen in order to obtain a melting point of less than 150 degrees C, such as from about and 90 degrees C to about 135 degrees C.

Exemplary commercially available copolymers include, but are not limited to, those available under the tradenames of "VESTAMID" (Evonik Industries, Essen, Germany); "PLATAMID" (Arkema, Colombes, France), e.g., product code H2694; "PEBAX" (Arkema), e.g., product code "PEBAX MH1657" and "PEBAX MV1074"; "PEBAX RNEW" (Arkema); "GRILAMID" (EMS-Chemie AG, Domat-Ems, Switzerland), or also to other similar materials produced by various other suppliers.

The polyamide can be physically crosslinked through, e.g., nonpolar or polar interactions between the polyamide groups of the polymers. In examples where the polyamide is a copolyamide, the copolyamide can be physically crosslinked through interactions between the polyamide groups, and optionally by interactions between the copolymer groups. When the co-polyamide is physically crosslinked through interactions between the polyamide groups, the polyamide segments can form the portion of the polymer referred to as the hard segment, and copolymer segments can form the portion of the polymer referred to as the soft segment. For example, when the copolyamide is a poly(ether-block-amide), the polyamide segments form the hard segments of the polymer, and polyether segments form the soft segments of the polymer. Therefore, in some examples, the polymer can include a physically crosslinked polymeric network having one or more polymer chains with amide linkages.

The polyamide segment of the co-polyamide can include polyamide-11 or polyamide-12 and the polyether segment can be a segment selected from the group consisting of polyethylene oxide, polypropylene oxide, and polytetramethylene oxide segments, and combinations thereof.

The polyamide can be partially or fully covalently crosslinked, as previously described herein. In some cases, the degree of crosslinking present in the polyamide is such that, when it is thermally processed, e.g., in the form of a yarn or fiber to form the articles of the present disclosure, the partially covalently crosslinked thermoplastic polyamide retains sufficient thermoplastic character that the partially covalently crosslinked thermoplastic polyamide is melted during the processing and re-solidifies. In other cases, the crosslinked polyamide is a thermoset polymer.

Polyesters

The polymers can comprise a polyester. The polyester can comprise a thermoplastic polyester, or a thermoset polyester. Additionally, the polyester can be an elastomeric polyester, including a thermoplastic polyester or a thermoset elastomeric polyester. The polyester can be formed by reaction of one or more carboxylic acids, or its ester-forming derivatives, with one or more bivalent or multivalent aliphatic, alicyclic, aromatic or araliphatic alcohols or a bisphenol. The polyester can be a polyester homopolymer having repeating polyester segments of the same chemical structure. Alternatively, the polyester can comprise a number of polyester segments having different polyester chemical structures (e.g., polyglycolic acid segments, polylactic acid segments, polycaprolactone segments, polyhydroxyalkanoate segments, polyhydroxybutyrate segments, etc.). The polyester segments having different chemical structure can be arranged randomly, or can be arranged as repeating blocks.

Exemplary carboxylic acids that can be used to prepare a polyester include, but are not limited to, adipic acid, pimelic acid, suberic acid, azelaic acid, sebacic acid, nonane dicarboxylic acid, decane dicarboxylic acid, undecane dicarboxylic acid, terephthalic acid, isophthalic acid, alkyl-substituted or halogenated terephthalic acid, alkyl-substituted or halogenated isophthalic acid, nitro-terephthalic acid, 4,4'-diphenyl ether dicarboxylic acid, 4,4'-diphenyl thioether dicarboxylic acid, 4,4'-diphenyl sulfone-dicarboxylic acid, 4,4'-diphenyl alkylenedicarboxylic acid, naphthalene-2,6-dicarboxylic acid, cyclohexane-1,4-dicarboxylic acid and cyclohexane-1,3-dicarboxylic acid. Exemplary diols or phenols suitable for the preparation of the polyester include, but are not limited to, ethylene glycol, diethylene glycol, 1,3-propanediol, 1,4-butanediol, 1,6-hexanediol, 1,8-octanediol, 1,10-decanediol, 1,2-propanediol, 2,2-dimethyl-1,3-propanediol, 2,2,4-trimethylhexanediol, p-xylenediol, 1,4-cyclohexanediol, 1,4-cyclohexane dimethanol, and bis-phenol A.

The polyester can be a polybutylene terephthalate (PBT), a polytrimethylene terephthalate, a polyhexamethylene terephthalate, a poly-1,4-dimethylcyclohexane terephthalate, a polyethylene terephthalate (PET), a polyethylene isophthalate (PEI), a polyarylate (PAR), a polybutylene naphthalate (PBN), a liquid crystal polyester, or a blend or mixture of two or more of the foregoing.

The polyester can be a co-polyester (i.e., a co-polymer including polyester segments and non-polyester segments). The co-polyester can be an aliphatic co-polyester (i.e., a co-polyester in which both the polyester segments and the non-polyester segments are aliphatic). Alternatively, the co-polyester can include aromatic segments. The polyester segments of the co-polyester can comprise or consist essentially of polyglycolic acid segments, polylactic acid segments, polycaprolactone segments, polyhydroxyalkanoate segments, polyhydroxybutyrate segments, or any combination thereof. The polyester segments of the co-polyester can be arranged randomly, or can be arranged as repeating blocks.

For example, the polyester can be a block co-polyester having repeating blocks of polymeric units of the same chemical structure which are relatively harder (hard segments), and repeating blocks of the same chemical structure which are relatively softer (soft segments). In block co-polyesters, including block co-polyesters having repeating hard segments and soft segments, physical crosslinks can be present within the blocks or between the blocks or both within and between the blocks. The polymer can comprise or consist essentially of an elastomeric co-polyester having repeating blocks of hard segments and repeating blocks of soft segments.

The non-polyester segments of the co-polyester can comprise or consist essentially of polyether segments, polyamide segments, or both polyether segments and polyamide segments. The co-polyester can be a block co-polyester, or can be a random co-polyester. The co-polyester can be formed from the polycondensation of a polyester oligomer or prepolymer with a second oligomer prepolymer to form a block copolyester. Optionally, the second prepolymer can be a hydrophilic prepolymer. For example, the co-polyester can be formed from the polycondensation of terephthalic acid or naphthalene dicarboxylic acid with ethylene glycol, 1,4-butanediol, or 1,3-propanediol. Examples of co-polyesters include polyethylene adipate, polybutylene succinate, poly(3-hydroxbutyrate-co-3-hydroxyvalerate), polyethylene terephthalate, polybutylene terephthalate, polytrimethylene terephthalate, polyethylene napthalate, and combinations thereof. The co-polyamide can comprise or consist of polyethylene terephthalate.

The polyester can be a block copolymer comprising segments of one or more of polybutylene terephthalate (PBT), a polytrimethylene terephthalate, a polyhexamethylene terephthalate, a poly-1,4-dimethylcyclohexane terephthalate, a polyethylene terephthalate (PET), a polyethylene isophthalate (PEI), a polyarylate (PAR), a polybutylene naphthalate (PBN), and a liquid crystal polyester. For example, a suitable polyester that is a block copolymer can be a PET/PEI copolymer, a polybutylene terephthalate/tetraethylene glycol copolymer, a polyoxyalkylenediimide diacid/polybutylene terephthalate copolymer, or a blend or mixture of any of the foregoing.

Polyolefins

The polymers can comprise or consist essentially of a polyolefin. The polyolefin can be a thermoplastic polyolefin or a thermoset polyolefin. Additionally, the polyolefin can be an elastomeric polyolefin, including a thermoplastic elastomeric polyolefin or a thermoset elastomeric polyolefin. Exemplary polyolefins can include polyethylene, polypropylene, and olefin elastomers (e.g., metallocene-catalyzed block copolymers of ethylene and $\alpha$-olefins having 4 to about 8 carbon atoms). The polyolefin can be a polymer comprising a polyethylene, an ethylene-$\alpha$-olefin copolymer, an ethylene-propylene rubber (EPDM), a polybutene, a polyisobutylene, a poly-4-methylpent-1-ene, a polyisoprene, a polybutadiene, a ethylene-methacrylic acid copolymer, and an olefin elastomer such as a dynamically crosslinked polymer obtained from polypropylene (PP) and an ethylene-propylene rubber (EPDM), and blends or mixtures of the foregoing. Further exemplary polyolefins include polymers of cycloolefins such as cyclopentene or norbornene.

It is to be understood that polyethylene, which optionally can be crosslinked, is inclusive a variety of polyethylenes, including low density polyethylene (LDPE), linear low density polyethylene (LLDPE), (VLDPE) and (ULDPE), medium density polyethylene (MDPE), high density polyethylene (HDPE), high density and high molecular weight polyethylene (HDPE-HMW), high density and ultrahigh molecular weight polyethylene (HDPE-UHMW), and blends or mixtures of any the foregoing polyethylenes. A polyethylene can also be a polyethylene copolymer derived from monomers of monolefins and diolefins copolymerized with a vinyl, acrylic acid, methacrylic acid, ethyl acrylate, vinyl alcohol, and/or vinyl acetate. Polyolefin copolymers comprising vinyl acetate-derived units can be a high vinyl acetate content copolymer, e.g., greater than about 50 weight percent vinyl acetate-derived composition.

The polyolefin can be a mixture of polyolefins, such as a mixture of two or more polyolefins disclosed herein above. For example, a suitable mixture of polyolefins can be a mixture of polypropylene with polyisobutylene, polypropylene with polyethylene (for example PP/HDPE, PP/LDPE) or mixtures of different types of polyethylene (for example LDPE/HDPE).

The polyolefin can be a copolymer of suitable monolefin monomers or a copolymer of a suitable monolefin monomer and a vinyl monomer. Exemplary polyolefin copolymers include ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.

The polyolefin can be a polypropylene homopolymer, a polypropylene copolymers, a polypropylene random copolymer, a polypropylene block copolymer, a polyethylene homopolymer, a polyethylene random copolymer, a polyethylene block copolymer, a low density polyethylene (LDPE), a linear low density polyethylene (LLDPE), a medium density polyethylene, a high density polyethylene (HDPE), or blends or mixtures of one or more of the preceding polymers.

The polyolefin can be a polypropylene. The term "polypropylene," as used herein, is intended to encompass any polymeric composition comprising propylene monomers, either alone or in mixture or copolymer with other randomly selected and oriented polyolefins, dienes, or other monomers (such as ethylene, butylene, and the like). Such a term also encompasses any different configuration and arrangement of the constituent monomers (such as atactic, syndiotactic, isotactic, and the like). Thus, the term as applied to fibers is intended to encompass actual long strands, tapes, threads, and the like, of drawn polymer. The polypropylene can be of any standard melt flow (by testing); however, standard fiber grade polypropylene resins possess ranges of Melt Flow Indices between about 1 and 1000.

The polyolefin can be a polyethylene. The term "polyethylene," as used herein, is intended to encompass any polymeric composition comprising ethylene monomers, either alone or in mixture or copolymer with other randomly selected and oriented polyolefins, dienes, or other monomers (such as propylene, butylene, and the like). Such a term also encompasses any different configuration and arrangement of the constituent monomers (such as atactic, syndiotactic, isotactic, and the like). Thus, the term as applied to fibers is intended to encompass actual long strands, tapes, threads, and the like, of drawn polymer. The polyethylene can be of any standard melt flow (by testing); however, standard fiber grade polyethylene resins possess ranges of Melt Flow Indices between about 1 and 1000.

The thermoplastic and/or thermosetting material can further comprise one or more processing aids. The processing aid can be a non-polymeric material. These processing aids can be independently selected from the group including, but not limited to, curing agents, initiators, plasticizers, mold release agents, lubricants, antioxidants, flame retardants, dyes, pigments, reinforcing and non-reinforcing fillers, fiber reinforcements, and light stabilizers.

In articles that include a textile, the optical unit can be disposed onto the textile (e.g., the optical unit is likely in the "on its side" configuration unless the textile is thin or otherwise the first side of the optical unit can be illuminated). The textile or at least an outer layer of the textile can include a thermoplastic material that the optical unit can disposed onto. The textile can be a nonwoven textile, a synthetic leather, a knit textile, or a woven textile. The textile can comprise a first fiber or a first yarn, where the first fiber or the first yarn can include at least an outer layer formed of the first thermoplastic material. A region of the first or second side of the structure onto which the optical unit is disposed can include the first fiber or the first yarn in a non-filamentous conformation. The optical unit can be disposed onto the textile or the textile can be processed so that the optical unit can be disposed onto the textile. The textured surface can be made of or formed from the textile surface. The textile surface can be used to form the textured surface, and either before or after this, the optical unit can be applied to the textile.

A "textile" may be defined as any material manufactured from fibers, filaments, or yarns characterized by flexibility, fineness, and a high ratio of length to thickness. Textiles generally fall into two categories. The first category includes textiles produced directly from webs of filaments or fibers by randomly interlocking to construct non-woven fabrics and felts. The second category includes textiles formed through a mechanical manipulation of yarn, thereby producing a woven fabric, a knitted fabric, a braided fabric, a crocheted fabric, and the like.

The terms "filament," "fiber," or "fibers" as used herein refer to materials that are in the form of discrete elongated pieces that are significantly longer than they are wide. The fiber can include natural, manmade or synthetic fibers. The fibers may be produced by conventional techniques, such as extrusion, electrospinning, interfacial polymerization, pulling, and the like. The fibers can include carbon fibers, boron fibers, silicon carbide fibers, titania fibers, alumina fibers, quartz fibers, glass fibers, such as E, A, C, ECR, R, S, D, and NE glasses and quartz, or the like. The fibers can be fibers formed from synthetic polymers capable of forming fibers such as poly(ether ketone), polyimide, polybenzoxazole, poly(phenylene sulfide), polyesters, polyolefins (e.g., polyethylene, polypropylene), aromatic polyamides (e.g., an aramid polymer such as para-aramid fibers and meta-aramid fibers), aromatic polyimides, polybenzimidazoles, polyetherimides, polytetrafluoroethylene, acrylic, modacrylic, poly(vinyl alcohol), polyamides, polyurethanes, and copolymers such as polyether-polyurea copolymers, polyester-polyurethanes, polyether block amide copolymers, or the like. The fibers can be natural fibers (e.g., silk, wool, cashmere, vicuna, cotton, flax, hemp, jute, sisal). The fibers can be man-made fibers from regenerated natural polymers, such as rayon, lyocell, acetate, triacetate, rubber, and poly(lactic acid).

The fibers can have an indefinite length. For example, man-made and synthetic fibers are generally extruded in substantially continuous strands. Alternatively, the fibers can be staple fibers, such as, for example, cotton fibers or extruded synthetic polymer fibers can be cut to form staple fibers of relatively uniform length. The staple fiber can have a have a length of about 1 millimeter to 100 centimeters or more as well as any increment therein (e.g., 1 millimeter increments).

The fiber can have any of a variety of cross-sectional shapes. Natural fibers can have a natural cross-section, or can have a modified cross-sectional shape (e.g., with processes such as mercerization). Man-made or synthetic fibers can be extruded to provide a strand having a predetermined cross-sectional shape. The cross-sectional shape of a fiber can affect its properties, such as its softness, luster, and wicking ability. The fibers can have round or essentially round cross sections. Alternatively, the fibers can have non-round cross sections, such as flat, oval, octagonal, rectangular, wedge-shaped, triangular, dog-bone, multi-lobal, multi-channel, hollow, core-shell, or other shapes.

The fiber can be processed. For example, the properties of fibers can be affected, at least in part, by processes such as drawing (stretching) the fibers, annealing (hardening) the fibers, and/or crimping or texturizing the fibers.

In some cases a fiber can be a multi-component fiber, such as one comprising two or more co-extruded polymeric materials. The two or more co-extruded polymeric materials can be extruded in a core-sheath, islands-in-the-sea, segmented-pie, striped, or side-by-side configuration. A multi-component fiber can be processed in order to form a plurality of smaller fibers (e.g., microfibers) from a single fiber, for example, by remove a sacrificial material.

The fiber can be a carbon fiber such as TARIFYL produced by Formosa Plastics Corp. of Kaohsiung City, Taiwan, (e.g., 12,000, 24,000, and 48,000 fiber tows, specifically fiber types TC-35 and TC-35R), carbon fiber produced by SGL Group of Wiesbaden, Germany (e.g., 50,000 fiber tow), carbon fiber produced by Hyosung of Seoul, South Korea, carbon fiber produced by Toho Tenax of Tokyo, Japan, fiberglass produced by Jushi Group Co., LTD of Zhejiang, China (e.g., E6, 318, silane-based sizing, filament diameters 14, 15, 17, 21,and 24 micrometers), and polyester fibers produced by Amann Group of Bonningheim, Germany (e.g., SERAFILE 200/2 non-lubricated polyester filament and SERAFILE COMPHIL 200/2 lubricated polyester filament).

A plurality of fibers includes 2 to hundreds or thousands or more fibers. The plurality of fibers can be in the form of bundles of strands of fibers, referred to as tows, or in the form of relatively aligned staple fibers referred to as sliver and roving. A single type fiber can be used either alone or in combination with one or more different types of fibers by co-mingling two or more types of fibers. Examples of co-mingled fibers include polyester fibers with cotton fibers, glass fibers with carbon fibers, carbon fibers with aromatic polyimide (aramid) fibers, and aromatic polyimide fibers with glass fibers.

As used herein, the term "yarn" refers to an assembly formed of one or more fibers, wherein the strand has a substantial length and a relatively small cross-section, and is suitable for use in the production of textiles by hand or by machine, including textiles made using weaving, knitting, crocheting, braiding, sewing, embroidery, or ropemaking techniques. Thread is a type of yarn commonly used for sewing.

Yarns can be made using fibers formed of natural, man-made and synthetic materials. Synthetic fibers are most commonly used to make spun yarns from staple fibers, and filament yarns. Spun yarn is made by arranging and twisting staple fibers together to make a cohesive strand. The process of forming a yarn from staple fibers typically includes carding and drawing the fibers to form sliver, drawing out and twisting the sliver to form roving, and spinning the roving to form a strand. Multiple strands can be plied (twisted together) to make a thicker yarn. The twist direction of the staple fibers and of the plies can affect the final properties of the yarn. A filament yarn can be formed of a single long, substantially continuous filament, which is conventionally referred to as a "monofilament yarn," or a plurality of individual filaments grouped together. A filament yarn can also be formed of two or more long, substantially continuous filaments which are grouped together by grouping the filaments together by twisting them or entangling them or both. As with staple yarns, multiple strands can be plied together to form a thicker yarn.

Once formed, the yarn can undergo further treatment such as texturizing, thermal or mechanical treating, or coating with a material such as a synthetic polymer. The fibers, yarns, or textiles, or any combination thereof, used in the disclosed articles can be sized. Sized fibers, yarns, and/or textiles are coated on at least part of their surface with a sizing composition selected to change the absorption or wear characteristics, or for compatibility with other materials. The sizing composition facilitates wet-out and wet-through of the coating or resin upon the surface and assists in attaining desired physical properties in the final article. An exemplary sizing composition can comprise, for example, epoxy polymers, urethane-modified epoxy polymers, polyester polymers, phenol polymers, polyamide polymers, polyurethane polymers, polycarbonate polymers, polyetherimide polymers, polyamideimide polymers, polystylylpyridine polymers, polyimide polymers bismaleimide polymers, polysulfone polymers, polyethersulfone polymers, epoxy-modified urethane polymers, polyvinyl alcohol polymers, polyvinyl pyrrolidone polymers, and mixtures thereof.

Two or more yarns can be combined, for example, to form composite yarns such as single- or double-covered yarns, and corespun yarns. Accordingly, yarns may have a variety of configurations that generally conform to the descriptions provided herein.

The yarn can comprise at least one thermoplastic material (e.g., one or more of the fibers can be made of thermoplastic material). The yarn can be made of a thermoplastic material. The yarn can be coated with a layer of a material such as a thermoplastic material.

The linear mass density or weight per unit length of a yarn can be expressed using various units, including denier (D) and tex. Denier is the mass in grams of 9000 meters of yarn. The linear mass density of a single filament of a fiber can also be expressed using denier per filament (DPF). Tex is the mass in grams of a 1000 meters of yarn. Decitex is another measure of linear mass, and is the mass in grams for a 10,000 meters of yarn.

As used herein, tenacity is understood to refer to the amount of force (expressed in units of weight, for example: pounds, grams, centinewtons or other units) needed to break a yarn (i.e., the breaking force or breaking point of the yarn), divided by the linear mass density of the yarn expressed, for example, in (unstrained) denier, decitex, or some other measure of weight per unit length. The breaking force of the yarn is determined by subjecting a sample of the yarn to a known amount of force, for example, using a strain gauge load cell such as an INSTRON brand testing system (Norwood, MA, USA). Yarn tenacity and yarn breaking force are distinct from burst strength or bursting strength of a textile, which is a measure of how much pressure can be applied to the surface of a textile before the surface bursts.

Generally, in order for a yarn to withstand the forces applied in an industrial knitting machine, the minimum tenacity required is approximately 1.5 grams per Denier. Most yarns formed from commodity polymeric materials generally have tenacities in the range of about 1.5 grams per Denier to about 4 grams per Denier. For example, polyester yarns commonly used in the manufacture of knit uppers for footwear have tenacities in the range of about 2.5 to about 4 grams per Denier. Yarns formed from commodity polymeric materials which are considered to have high tenacities generally have tenacities in the range of about 5 grams per Denier to about 10 grams per Denier. For example, commercially available package dyed polyethylene terephthalate yarn from National Spinning (Washington, NC, USA) has a tenacity of about 6 grams per Denier, and commercially available solution dyed polyethylene terephthalate yarn from Far Eastern New Century (Taipei, Taiwan) has a tenacity of about 7 grams per Denier. Yarns formed from high performance polymeric materials generally have tenacities of about 11 grams per Denier or greater. For example, yarns formed of aramid fiber typically have tenacities of about 20 grams per Denier, and yarns formed of ultra-high molecular weight polyethylene (UHMWPE) having tenacities greater than 30 grams per Denier are available from Dyneema (Stanley, NC, USA) and Spectra (Honeywell-Spectra, Colonial Heights, VA, USA).

Various techniques exist for mechanically manipulating yarns to form a textile. Such techniques include, for example, interweaving, intertwining and twisting, and interlooping. interweaving is the intersection of two yarns that cross and interweave at right angles to each other. The yarns utilized in interweaving are conventionally referred to as "warp" and "weft." A woven textile includes include a warp yarn and a weft yarn. The warp yarn extends in a first direction, and the weft strand extends in a second direction that is substantially perpendicular to the first direction. Intertwining and twisting encompasses various procedures, such as braiding and knotting, where yarns intertwine with each other to form a textile. Interlooping involves the formation of a plurality of columns of intermeshed loops, with knitting being the most common method of interlooping. The textile may be primarily formed from one or more yarns that are mechanically-manipulated, for example, through interweaving, intertwining and twisting, and/or interlooping processes, as mentioned above.

The textile can be a nonwoven textile. Generally, a nonwoven textile or fabric is a sheet or web structure made from fibers and/or yarns that are bonded together. The bond can be a chemical and/or mechanical bond, and can be formed using heat, solvent, adhesive or a combination thereof. Exemplary nonwoven fabrics are flat or tufted porous sheets that are made directly from separate fibers, molten plastic and/or plastic film. They are not made by weaving or knitting and do not necessarily require converting the fibers to yarn, although yarns can be used as a source of the fibers. Nonwoven textiles are typically manufactured by putting small fibers together in the form of a sheet or web (similar to paper on a paper machine), and then binding them either mechanically (as in the case of felt, by interlocking them with serrated or barbed needles, or hydro-entanglement such that the inter-fiber friction results in a stronger fabric), with an adhesive, or thermally (by applying binder (in the form of powder, paste, or polymer melt) and melting the binder onto the web by increasing temperature). A nonwoven textile can be made from staple fibers (e.g., from wetlaid, airlaid, carding/crosslapping processes), or extruded fibers (e.g., from meltblown or spunbond processes, or a combination thereof), or a combination thereof. Bonding of the fibers in the nonwoven textile can be achieved with thermal bonding (with or without calendering), hydro-entanglement, ultrasonic bonding, needlepunching (needlefelting), chemical bonding (e.g., using binders such as latex emulsions or solution polymers or binder fibers or powders), meltblown bonding (e.g., fiber is bonded as air attenuated fibers intertangle during simultaneous fiber and web formation).

Now having described various aspects of the present disclosure, additional discussion is provided regarding when the optical unit is used in conjunction with a bladder. The bladder can be unfilled, partially inflated, or fully inflated when the optical unit is disposed onto the bladder. The bladder is a bladder capable of including a volume of a fluid. An unfilled bladder is a fluid-fillable bladder and a filled bladder that has been at least partially inflated with a fluid at a pressure equal to or greater than atmospheric pressure. When disposed onto or incorporated into an article of footwear, apparel, or sports equipment, the bladder is generally, at that point, a fluid-filled bladder. The fluid be a gas or a liquid.

The gas can include air, nitrogen gas ($N_2$), or other appropriate gas.

The bladder can have a gas transmission rate for nitrogen gas, for example, where a bladder wall of a given thickness has a gas transmission rate for nitrogen that is at least about ten times lower than the gas transmission rate for nitrogen of a butyl rubber layer of substantially the same thickness as the thickness of the bladder described herein. The bladder can have a first bladder wall having a first bladder wall thickness (e.g., about 0.1 to 40 mils). The bladder can have a first bladder wall that can have a gas transmission rate (GTR) for nitrogen gas of less than about 15 $cm^3/m^2 \cdot atm \cdot day$, less than about 10 $m^3/m^2 \cdot atm \cdot day$, less than about 5 $cm^3/m^2 \cdot atm \cdot day$, less than about 1 $cm^3/m^2 \cdot atm \cdot day$ (e.g., from about 0.001 $cm^3/m^2 \cdot atm \cdot day$ to about 1 $cm^3/m^2 \cdot atm \cdot day$, about 0.01 $cm^3/m^2 \cdot atm \cdot day$ to about 1 $cm^3/m^2 \cdot atm \cdot day$ or about 0.1 $cm^3/m^2 \cdot atm \cdot day$ to about 1 $cm^3/m^2 \cdot atm \cdot day$) for an average wall thickness of 20 mils. The bladder can have a first bladder wall having a first bladder wall thickness, where the first bladder wall has a gas transmission rate of 15 $cm^3/m^2 \cdot atm \cdot day$ or less for nitrogen for an average wall thickness of 20 mils.

In an aspect, the bladder has a bladder wall having an interior-facing side and an exterior (or externally)-facing side, where the interior (or internally)-facing side defines at least a portion of an interior region of the bladder. The optical unit having a first side and a second opposing side can be disposed on the exterior-facing side of the bladder, the interior-facing side of the bladder, or both. The optical unit can be disposed in-line or on its side. Where the optical unit is disposed on its side, the optical unit is disposed on the interior-facing side or the exterior-facing side on its side configuration as opposed to in line configuration.

The exterior-facing side of the bladder, the interior-facing side of the bladder, or both can optionally include a plurality of topographical structures (or profile features) extending from the exterior-facing side of the bladder wall, the interior-facing side of the bladder, or both, where the first side or the second side of the optical unit is disposed on the exterior-facing side of the bladder wall and covering the plurality of topographical structures, the interior-facing side of the bladder wall and covering the plurality of topographical structures, or both, and wherein the optical unit imparts a structural color to the bladder wall.

In a particular aspect, the bladder can include a top wall operably secured to the footwear upper, a bottom wall opposite the top wall, and one or more sidewalls extending between the top wall and the bottom wall of the inflated bladder. The top wall, the bottom wall, and the one or more sidewalls collectively define an interior region of the inflated bladder, and wherein the one or more sidewalls each comprise an exterior-facing side. The optical unit having a first side and a second opposing side can be disposed on the exterior-facing side of the bladder, the interior-facing side of the bladder, or both. Optionally, the exterior-facing side of the bladder, the interior-facing side of the bladder, or both can include a plurality of topographical structures extending from the exterior-facing side of the bladder wall, the interior-facing side of the bladder, or both, where the first side or the second side of the optical unit is disposed on the exterior-facing side of the bladder wall and covering the plurality of topographical structures, the interior-facing side of the bladder wall and covering the plurality of topographical structures, or both, and wherein the optical unit imparts a structural color to the bladder wall.

An accepted method for measuring the relative permeance, permeability, and diffusion of inflated bladders is ASTM D-1434-82-V. See, e.g., U.S. Patent No. 6,127,026. According to ASTM D-1434-82-V, permeance, permeability and diffusion are measured by the following formulae:

Permeance

$$\text{(quantity of gas)}/[\text{(area )}x\text{(time )}x\text{(pressure difference)}] = \text{permeance (GTR)}/\text{(pressure difference)} = cm^3/m^2 \cdot atm \cdot day \text{ (i.e., 24 hours)}$$

Permeability

$$[\text{(quantity of gas)}x\text{(film thickness)}][\text{(area )}x\text{(time )}x\text{(pressure difference)}] = \text{permeability} [\text{(GTR)}x\text{(film thickness)}]/\text{(pressure difference)} = [(cm^3)(mil)]/m^2 \cdot atm \cdot day \text{ (i.e., 24 hours)}$$

Diffusion at one atmosphere

$$\text{(quantity of gas)}/[\text{(area )}x\text{(time )}] = GTR = cm^3/m^2 \cdot day \text{ (i.e., 24 hours)}$$

The bladder can include a bladder wall that includes a film including at least one polymeric layer or at least two or more polymeric layers. Each of the polymeric layers can be about 0.1 to 40 mils in thickness.

The polymeric layer can be formed of polymer material such as a thermoplastic material as described above and herein and can be the thermoplastic layer upon which the optical unit can be disposed and optionally upon which the textured layer can be disposed or the thermoplastic layer can be used to form the textured layer, and the like. The thermoplastic material can include an elastomeric material, such as a thermoplastic elastomeric material. The thermoplastic materials can include thermoplastic polyurethane (TPU), such as those described above and herein. The thermoplastic materials can include polyester-based TPU, polyether-based TPU, polycaprolactone-based TPU, polycarbonate-based TPU, polysiloxane-based TPU, or combinations thereof. Non-limiting examples of thermoplastic material that can be used include: "PELLETHANE" 2355-85ATP and 2355-95AE (Dow Chemical Company of Midland, MI., USA), "ELASTOLLAN" (BASF Corporation, Wyandotte, M!, USA) and "ESTANE" (Lubrizol, Brecksville, OH, USA), all of which are either ester or ether based. Additional thermoplastic material can include those described in U.S. Pat. Nos. 5,713,141; 5,952,065; 6,082,025; 6,127,026; 6,013,340; 6,203,868; and 6,321,465.

The polymeric layer can be formed of one or more of the following: ethylene-vinyl alcohol copolymers (EVOH), poly(vinyl chloride), polyvinylidene polymers and copolymers (e.g., polyvinylidene chloride), polyamides (e.g., amorphous polyamides), acrylonitrile polymers (e.g., acrylonitrile-methyl acrylate copolymers), polyurethane engineering plastics, polymethylpentene resins, ethylene-carbon monoxide copolymers, liquid crystal polymers, polyethylene terephthalate, polyether imides, polyacrylic imides, and other polymeric materials known to have relatively low gas transmission rates. Blends and alloys of these materials as well as with the TPUs described herein and optionally including combinations of polyimides and crystalline polymers, are also suitable. For instance, blends of polyimides and liquid crystal polymers, blends of polyamides and polyethylene terephthalate, and blends of polyamides with styrenics are suitable.

Specific examples of polymeric materials of the polymeric layer can include acrylonitrile copolymers such as "BAREX" resins, available from Ineos (Rolle, Switzerland); polyurethane engineering plastics such as "ISPLAST" ETPU available from Lubrizol (Brecksville, OH, USA); ethylene-vinyl alcohol copolymers marketed under the tradenames "EVAL" by Kuraray (Houston, TX, USA), "SOARNOL" by Nippon Gohsei (Hull, England), and "SELAR OH" by DuPont (Wilmington, DE, USA); polyvinylidiene chloride available from S.C. Johnson (Racine, WI, USA) under the tradename "SARAN", and from Solvay (Brussels, Belgium) under the tradename "IXAN"; liquid crystal polymers such as "VECTRA" from Celanese (Irving, TX, USA) and "XYDAR" from Solvay; "MDX6" nylon, and amorphous nylons such as "NOVAMID" X21 from Koninklijke DSM N.V (Heerlen, Netherlands), "SELAR PA" from DuPont; polyetherimides sold under the tradename "ULTEM" by SABIC (Riyadh, Saudi Arabia); poly(vinyl alcohol)s; and polymethylpentene resins available from Mitsui Chemicals (Tokyo, Japan) under the tradename "TPX".

Each polymeric layer of the film can be formed of a thermoplastic material which can include a combination of thermoplastic polymers. In addition to one or more thermoplastic polymers, the thermoplastic material can optionally include a colorant, a filler, a processing aid, a free radical scavenger, an ultraviolet light absorber, and the like. Each polymeric layer of the film can be made of a different of thermoplastic material including a different type of thermoplastic polymer.

The bladder can be made by applying heat, pressure and/or vacuum to a film. In this regard, the optical unit and optionally the textured layer, and the like can be disposed, formed from, or the like prior to, during, and/or after these steps. The bladder (e.g., one or more polymeric layers) can be formed using one or more polymeric materials, and forming the bladder using one or more processing techniques including, for example, extrusion, blow molding, injection molding, vacuum molding, rotary molding, transfer molding, pressure forming, heat sealing, casting, low-pressure casting, spin casting, reaction injection molding, radio frequency (RF) welding, and the like. The bladder can be made by co-extrusion followed by heat sealing or welding to give an inflatable bladder, which can optionally include one or more valves (e.g., one way valves) that allows the bladder to be filled with the fluid (e.g., gas).

Now having described the optical unit, the optional textured surface, and methods of making the article are now described. In an aspect, the method includes forming layers using one or more techniques described herein.

In general, the method includes forming the optical unit (e.g., the first base unit) in a layer-by-layer manner on a surface of an article such as a textile, film, fiber, or monofilament yarn, where the surface can optionally be the textured surface. Then after the first base unit is formed, the second units can be formed in a layer-by-layer manner using a masking technique, for example. Another embodiment of the present disclosure includes disposing the optical unit (that was already formed) on the substrate.

The method can include forming the first base unit on the surface of the article in a layer-by-layer manner. Then method can include masking at least a portion of the surface of the first base unit creating one or more portions of the surface of the first base unit including adjacent masked and unmasked regions. Masking can include disposing, positioning, or applying a masking element onto a surface of the first base unit or a certain distance (e.g., nanometers, micrometers, millimeters, or centimeters away based on the desired design and goal) from the first base unit surface. The layers of the second unit can be disposed, applied, or positioned onto the portion of the surface of the article. Subsequently, the at least a portion of the surface of the article can be unmasked (e.g., removing the masking element), exposing a structurally colored surface including at least a first structural color, a second structural color, wherein a hue, a value, a chroma, or any combination thereof of the first structural color and the second structural color are different when viewed from the same angle of observation. The masking element can include traditional masking element or can include a film, a fiber, a filament, or a yarn.

In an aspect, the masking step can include directly contacting the surface with the masking element during the disposing, where disposing the second unit to the masked region can include disposing at least one layer to the masked region. Subsequently, removing the masking element comprises exposing regions of the first base unit which are free of the at least one layer. The masking element can be affixed to the surface of the first base unit with an adhesive, for example.

In another aspect, masking can include disposing the optical unit at a distance from the surface of the first base unit and between the surface of the first base unit and a source disposing the optical unit, such that, during the disposing, the masking element partially blocks a portion of the surface of the first base unit, or casts a shadow onto a portion of the surface of the first base unit. The masking element can be disposed or positioned at least 1 millimeter away from the surface of the first base unit during the disposing of the layers. Optionally, the distance from the surface of the first base unit to the masking element can varies during the disposing; or the distance from the surface of the first base unit to the masking element can be substantially constant during the disposition of the layers of the optical unit.

The method can provide for the layers of the optical unit being formed on the textured surface. Alternatively, the textured surface can be formed in/on the layer adjacent the surface of the article, and then the remaining layers are disposed thereon. As described herein, the optical unit (first base unit and the second unit) can be formed in a layer-by-layer manner, where each layer has a different index of refraction. As each layer is formed the undulations and flat regions are altered. The combination of the optional textured surface (e.g., dimensions, shape, and/or spacing of the profile elements) and the layers of the optical unit (e.g., number of layers, thickness of layers, material of the layers) and the resultant undulations and planar areas impart the structural color when exposed to visible light. The method includes optionally forming a protective layer over the optical unit to protect the optical unit. Each layer of the optical unit can be formed in turn, where each layer can be formed then after an appropriate amount of time, additional processing, cooling, or the like, the next layer of the optical unit can be formed.

Measurements for visible light transmittance and visible light reflectance were performed using a Shimadzu UV-2600 Spectrometer (Shimadzu Corporation, Japan). The spectrometer was calibrated using a standard prior to the measurements. The incident angle for all measurements was zero.

The visible light transmittance was the measurement of visible light (or light energy) that was transmitted through a sample material when visible light within the spectral range of 300 nanometers to 800 nanometers was directed through the material. The results of all transmittance over the range of 300 nanometers to 800 nanometers was collected and recorded. For each sample, a minimum value for the visible light transmittance was determined for this range.

The visible light reflectance was a measurement of the visible light (or light energy) that was reflected by a sample material when visible light within the spectral range of 300 nanometers to 800 nanometers was directed through the material. The results of all reflectance over the range of 300 nanometers to 800 nanometers was collected and recorded. For each sample, a minimum value for the visible light reflectance was determined for this range.

It should be noted that ratios, concentrations, amounts, and other numerical data may be expressed herein in a range format. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a concentration range of "about 0.1 percent to about 5 percent" should be interpreted to include not only the explicitly recited concentration of about 0.1 weight percent to about 5 weight percent but also include individual concentrations (e.g., 1 percent, 2 percent, 3 percent, and 4 percent) and the sub-ranges (e.g., 0.5 percent, 1.1 percent, 2.2 percent, 3.3 percent, and 4.4 percent) within the indicated range. The term "about" can include traditional rounding according to significant figures of the numerical value. In addition, the phrase "about 'x' to 'y'" includes "about 'x' to about 'y'".

The term "providing", such as for "providing an article" and the like, when recited in the claims, is not intended to require any particular delivery or receipt of the provided item. Rather, the term "providing" is merely used to recite items that will be referred to in subsequent elements of the claim(s), for purposes of clarity and ease of readability.

## Claims

1. An article (100; 130; 160; 400), comprising:

a substrate (406) including an optical unit (12A'/12M' - 12A"/12M'; 112a-112b; 136a-136b;172a-172b; 175a-175d;182; 185; 187a-187e; 197; 200; 300; 402) disposed on a surface of the substrate, wherein the optical unit includes a first base unit (410) and one or more second units (420A, 420B) positioned on one or more areas of the first base unit, wherein the first base unit imparts a first structural color (432), wherein each of the second units impart one or more second structural colors (434, 442), wherein each second unit imparts the same or a different second structural color, wherein the first structural color and the one or more second structural colors are different in a hue, a lightness, a chroma, or any combination thereof when viewed from the same angle of observation by someone with 20 20 visual acuity, wherein the first base unit includes at least one layer (412A-412E), wherein the at least one second unit includes at least one layer (422A-422D, 424A-424D), wherein the at least one second unit positioned on one or more areas does not cover the entire area of the first base unit.

2. The article (100; 130; 160; 400) of claim 1, wherein the imparted second structural color (434, 442) is attributed to the layers (422A-422D, 424A-424D) of the second unit (420A, 420B) and not the layers (412A-412E) of the first base unit (410); or wherein the imparted second structural color is attributed to the layers of the second unit in combination with the layers of the first base unit.

3. The article (100; 130; 160; 400) of claim 1 or claim 2, wherein the first base unit (410) has a base unit height of 10 to 200 nanometers and wherein each the second units (420A, 420B) has a base unit height of 10 to 200 nanometers, wherein each of the second units has a second unit area of 1 micrometer squared to 100 centimeters squared, and wherein a distance between two second units is 1 micrometer to 100 centimeters.

4. The article (100; 130; 160; 400) of any one of claims 1 to 3, wherein the first base unit (410) and the at least one of the second units (420A, 420B) are independently selected from an inorganic optical unit, an organic optical unit, or a mixed inorganic/organic optical unit.

5. The article (100; 130; 160; 400) of claim 4, wherein the organic optical unit has at least one layer (412A-412E, 422A-422D, 424A-424D) that is made of a polymeric material; or wherein each layer of the organic optical unit is made of an organic material.

6. The article (100; 130; 160; 400) of claim 3, wherein the first base unit (410) has 4 to 20 layers (412A-412E) and the at least one of the second units (420A, 420B) has 4 to 10 layers (422A-422D, 424A-424D), wherein each layer has a thickness of 10 nanometers to 100 nanometers, wherein the optical unit (12A'/12M' - 12A"/12M'; 112a-112b; 136a-136b; 172a-172b; 175a-175d;182; 185; 187a-187e; 197; 200; 300; 402) has a thickness of 20 to 200 nanometers.

7. The article (100; 130; 160; 400) of any one of claims 1 to 6, wherein a reflective layer (422A-422D, 424A-424D) of the second unit (420A, 420B) is adjacent the first base unit (410), wherein the reflective layer has a minimum percent reflectance of 80 percent or more.

8. The article (100; 130; 160; 400) of any one of claims 1 to 7, wherein the first structural color (432), the second structural color (434, 442), or both exhibits a single hue when viewed from different viewing angles at least 15 degrees apart; or wherein the first structural color, the second structural color, or both exhibits multiple different hues when viewed from different viewing angles at least 15 degrees apart.

9. The article (100; 130; 160; 400) of any one of claims 1 to 7, wherein the first structural color (432), the second structural color (434, 442), or both has limited iridescence.

10. The article (100; 130; 160; 400) of claim 9, wherein the first structural color (432) is a chromatic color, wherein the second structural color (434, 442) is achromatic

11. The article (100; 130; 160; 400) of claim 1, wherein the surface of the substrate (406) comprises a textured surface that includes a plurality of profile features (222) and flat planar areas, wherein the profile features extend above the flat areas of the textured surface.

12. The article (100; 130; 160; 400) of claim 11, wherein dimensions of the profile features (222), a shape of the profile features, a spacing among the plurality of the profile features, or any combination thereof, in combination with the optical unit (12A'/12M' - 12A"/12M'; 112a-112b; 136a-136b;172a-172b; 175a-175d;182; 185; 187a-187e; 197; 200; 300; 402), affect a hue of the first structural color (432), a hue of the second structural color (434, 442), an intensity of the first structural color, an intensity of the second structural color, a viewing angle at which the first structural color is visible, a viewing angle at which the second structural color is visible, or any combination thereof; or wherein a hue of the first structural color, a hue of the second structural color, an intensity of the first structural color, an intensity of the second structural color, a viewing angle at which the first structural color is visible, a viewing angle at which the second structural color is visible, or any combination thereof, are unaffected or substantially unaffected by dimensions of the profile features, a shape of the profile features, a spacing among the plurality of the profile features, or any combination thereof, of the textured surface.

13. A method of making an article (100; 130; 160; 400), comprising: disposing the optical unit (12A'/12M' - 12A"/12M'; 112a-112b; 136a-136b;172a-172b; 175a-175d;182; 185; 187a-187e; 197; 200; 300; 402) of any one of claims 1 to 12 onto the surface of the article.

14. An article (100; 130; 160; 400) comprising: a product of the method of claim 13.

15. A method of making an article (100; 130; 160; 400), comprising:

- disposing, applying or positioning a first base unit (410) onto the surface of a substrate (406),
- masking at least a portion of the first base unit, creating a portion of the first base unit including adjacent masked and unmasked regions,
- disposing, applying or positioning a second unit (420A, 420B) on the unmasked regions,
- unmasking the masked regions (optionally removing the masking element), exposing a first base unit surface and a second unit surface,

wherein the first base unit imparts a first structural color (432) and the second unit surface imparts a second structural color (434, 442), wherein a hue, a lightness, a chroma, or any combination thereof of the first structural color and the second structural color are different when viewed from the same angle of observation by someone with 20 20 visual acuity.

**Patentansprüche**

1. Artikel (100; 130; 160; 400) mit:
einem Substrat (406) mit einer optischen Einheit (12A'/12M' - 12A"/12M'; 112a-112b; 136a-136b; 172a-172b; 175a-175d; 182; 185; 187a-187e; 197; 200; 300; 402), die auf einer Oberfläche des Substrats angeordnet ist, wobei die optische Einheit eine erste Basiseinheit (410) und eine oder mehrere zweite Einheiten (420A, 420B), die auf ein oder mehreren Bereichen der ersten Basiseinheit positioniert sind, aufweist, wobei die erste Basiseinheit eine erste strukturelle Farbe (432) verleiht, wobei jede der zweiten Einheiten eine oder mehrere zweite strukturelle Farben (434, 442) verleihen, wobei jede zweite Einheit dieselbe oder eine unterschiedliche zweite strukturelle Farbe verleiht, wobei die erste strukturelle Farbe und die ein oder mehreren zweiten strukturellen Farben bei einer Betrachtung unter demselben Betrachtungswinkel durch eine Person mit normaler Sehschärfe in Bezug auf einen Farbton, eine Helligkeit, eine Farbsättigung oder eine beliebige Kombination daraus unterschiedlich sind, wobei die erste Basiseinheit mindestens eine Schicht (412A-412E) aufweist, wobei die mindestens eine zweite Einheit mindestens eine Schicht (422A-422D, 424A-424D) aufweist, wobei die mindestens eine zweite Einheit, die auf ein oder mehreren Bereichen positioniert ist, nicht den gesamten Bereich der ersten Basiseinheit bedeckt.

2. Artikel (100; 130; 160; 400) nach Anspruch 1, bei dem die verliehene zweite strukturelle Farbe (434, 442) den Schichten (422A-422D, 424A-424D) der zweiten Einheit (420A, 420B) zugeschrieben wird, und nicht den Schichten (412A-412E) der ersten Basiseinheit (410); oder bei dem die verliehene zweite strukturelle Farbe den Schichten der zweiten Einheit in Kombination mit den Schichten der ersten Basiseinheit zugeschrieben wird.

3. Artikel (100; 130; 160; 400) nach Anspruch 1 oder Anspruch 2, bei dem die erste Basiseinheit (410) eine Basiseinheitshöhe von 10 bis 200 Nanometern aufweist und bei dem jede der zweiten Einheiten (420A, 420B) eine Basiseinheitshöhe von 10 bis 200 Nanometern aufweist, wobei jede der zweiten Einheiten eine Fläche der zweiten Einheit von 1 Mikrometer im Quadrat bis 100 Zentimeter im Quadrat aufweist und wobei ein Abstand zwischen zwei zweiten Einheiten ein Mikrometer bis 100 Zentimeter ist.

4. Artikel (100; 130; 160; 400) nach einem der Ansprüche 1 bis 3, bei dem die erste Basiseinheit (410) und die mindestens eine der zweiten Einheiten (420A, 420B) unabhängig voneinander ausgewählt sind aus einer anorganischen optischen Einheit, einer organischen optischen Einheit oder einer gemischt anorganischen/organischen optischen Einheit.

5. Artikel (100; 130; 160; 400) nach Anspruch 4, bei dem die organische optische Einheit mindestens eine Schicht (412A-412E, 422A-422D, 424A-424D) aufweist, die aus einem Polymermaterial besteht; oder bei dem jede Schicht der organischen optischen Einheit aus einem organischen Material besteht.

6. Artikel (100; 130; 160; 400) nach Anspruch 3, bei dem die erste Basiseinheit (410) 4 bis 20 Schichten (412A-412E) aufweist und die mindestens eine der zweiten Einheiten (420A, 420B) 4 bis 10 Schichten (422A-422D, 424A-424D) aufweist, wobei jede Schicht eine Dicke von 10 Nanometern bis 100 Nanometern aufweist, wobei die optische Einheit (12A'/12M'-12A"/12M'; 112a-112b; 136a-136b; 172a-172b; 175a-175d; 182; 185; 187a-187e; 197; 200; 300; 402) eine Dicke von 20 bis 200 Nanometern aufweist.

7. Artikel (100; 130; 160; 400) nach einem der Ansprüche 1 bis 6, bei dem eine reflektierende Schicht (422A-422D, 424A-424D) der zweiten Einheit (420A, 420B) benachbart zu der ersten Basiseinheit (410) ist, wobei die reflektierende Schicht einen minimalen prozentualen Reflexionsgrad von 80 Prozent oder mehr aufweist.

8. Artikel (100; 130; 160; 400) nach einem der Ansprüche 1 bis 7, bei dem die erste strukturelle Farbe (432), die zweite strukturelle Farbe (434, 442) oder beide bei einer Betrachtung unter unterschiedlichen Betrachtungswinkeln, die mindestens 15 Grad voneinander beabstandet sind, einen einzigen Farbton aufweisen; oder bei dem die erste strukturelle Farbe, die zweite strukturelle Farbe oder beide bei einer Betrachtung unter unterschiedlichen Betrachtungswinkeln, die mindestens 15 Grad voneinander beabstandet sind, mehrere unterschiedliche Farbtöne aufweisen.

9. Artikel (100; 130; 160; 400) nach einem der Ansprüche 1 bis 7, bei dem die erste strukturelle Farbe (432), die zweite strukturelle Farbe (434, 442) oder beide ein begrenztes Irisieren aufweisen.

10. Artikel (100; 130; 160; 400) nach Anspruch 9, bei dem die erste strukturelle Farbe (432) eine chromatische Farbe ist, wobei die zweite strukturelle Farbe (434, 442) achromatisch ist.

11. Artikel (100; 130; 160; 400) nach Anspruch 1, bei dem die Oberfläche des Substrats (406) eine texturierte Oberfläche aufweist, die mehrere Profilmerkmale (222) und flache ebene Bereiche aufweist, wobei sich die Profilmerkmale oberhalb der flachen Bereiche der texturierten Oberfläche erstrecken.

12. Artikel (100; 130; 160; 400) nach Anspruch 11, bei dem sich Abmessungen der Profilmerkmale (222), eine Form der Profilmerkmale, ein Abstand zwischen den mehreren der Profilmerkmalen oder eine Kombination daraus in Kombination mit der optischen Einheit (12A'/12M' - 12A"/12M'; 112a-112b; 136a-136b; 172a-172b; 175a-175d; 182; 185; 187a-187e; 197; 200; 300; 402) auf einen Farbton der ersten strukturellen Farbe (432), einen Farbton der zweiten strukturellen Farbe (434, 442), eine Intensität der ersten strukturellen Farbe, eine Intensität der zweiten strukturellen Farbe, einen Betrachtungswinkel, unter dem die erste strukturelle Farbe sichtbar ist, einen Betrachtungswinkel, unter dem die zweite strukturelle Farbe sichtbar ist, oder eine Kombination daraus auswirken; oder bei dem ein Farbton der ersten strukturellen Farbe, ein Farbton der zweiten strukturellen Farbe, eine Intensität der ersten strukturellen Farbe, eine Intensität der zweiten strukturellen Farbe, ein Betrachtungswinkel, unter dem die erste strukturelle Farbe sichtbar ist, ein Betrachtungswinkel, unter dem die zweite strukturelle Farbe sichtbar ist, oder eine Kombination daraus durch Abmessungen der Profilmerkmale, eine Form der Profilmerkmale, einen Abstand zwischen den mehreren der Profilmerkmale oder eine Kombination daraus der texturierten Oberfläche nicht oder im Wesentlichen nicht beeinflusst werden.

13. Verfahren zum Herstellen eines Artikels (100; 130; 160; 400), mit: Anordnen der optischen Einheit (12A'/12M' - 12A"/12M'; 112a-112b; 136a-136b; 172a-172b; 175a-175d; 182; 185; 187a-187e; 197; 200; 300; 402) nach einem der Ansprüche 1 bis 12 auf der Oberfläche des Artikels.

14. Artikel (100; 130; 160; 400) mit: einem Produkt des Verfahrens nach Anspruch 13.

15. Verfahren zum Herstellen eines Artikels (100; 130; 160; 400), mit:

    - Anordnen, Aufbringen oder Positionieren einer ersten Basiseinheit (410) auf der Oberfläche eines Substrats (406),
    - Maskieren mindestens eines Teils der ersten Basiseinheit, so dass ein Teil der ersten Basiseinheit mit benachbarten maskierten und nicht maskierten Regionen erzeugt wird,
    - Anordnen, Aufbringen oder Positionieren einer zweiten Einheit (420A, 420B) auf den nicht maskierten Regionen,
    - Freilegen der maskierten Regionen (optional Entfernen des Maskierungselements), so dass eine Oberfläche der ersten Basiseinheit und eine Oberfläche der zweiten Einheit freigelegt werden,

    bei dem die erste Basiseinheit eine erste strukturelle Farbe (432) verleiht und die Oberfläche der zweiten Einheit eine zweite strukturelle Farbe (434, 442) verleiht, wobei ein Farbton, eine Helligkeit, eine Farbsättigung oder eine Kombination daraus der ersten strukturellen Farbe und der zweiten strukturellen Farbe bei einer Betrachtung unter demselben Betrachtungswinkel durch eine Person mit normaler Sehschärfe unterschiedlich ist.

**Revendications**

1. Article (100 ; 130 ; 160 ; 400), comprenant :
   un substrat (406) comprenant une unité optique (12A'/12M' - 12A"/12M' ; 112a-112b ; 136a- 136b ; 172a-172b ; 175a-175d ; 182 ; 185 ; 187a-187e ; 197 ; 200 ; 300 ; 402) disposée sur une surface du substrat, dans laquelle l'unité optique comprend une première unité de base (410) et une ou plusieurs secondes unités (420A, 420B) positionnées sur une ou plusieurs zones de la première unité de base, dans lequel la première unité de base transmet une première couleur structurelle (432), dans lequel chacune des secondes unités transmet une ou plusieurs secondes couleurs structurelles (434, 442), dans lequel chaque seconde unité transmet la même seconde couleur structurelle ou une seconde couleur structurelle différente, dans lequel la première couleur structurelle et la ou les deuxièmes couleurs structurelles sont différentes en termes de teinte, de luminosité, de tonalité chromatique ou de toute combinaison de ces éléments lorsqu'elles sont observées sous le même angle par une personne ayant une acuité visuelle de 20/20, dans lequel la première unité de base comprend au moins une couche (412A-412E), dans lequel la ou les deuxièmes unités comprennent au moins une couche (422A-422D, 424A-424D), dans lequel la ou les deuxièmes unités positionnées sur une ou plusieurs zones ne couvrent pas toute la surface de la première unité de base.

2. Article (100 ; 130 ; 160 ; 400) selon la revendication 1, dans lequel la seconde couleur structurelle impartie (434, 442) est attribuée aux couches (422A-422D, 424A-424D) de la seconde unité (420A, 420B) et non aux couches (412A-412E) de la première unité de base (410) ; ou dans lequel la seconde couleur structurelle impartie est attribuée aux couches de la seconde unité en combinaison avec les couches de la première unité de base.

3. Article (100 ; 130 ; 160 ; 400) selon la revendication 1 ou la revendication 2, dans lequel la première unité de base (410) a une hauteur d'unité de base de 10 à 200 nanomètres et dans lequel chacune des secondes unités (420A, 420B) a une hauteur d'unité de base de 10 à 200 nanomètres, dans lequel chacune des secondes unités a une surface de seconde unité de 1 micromètre au carré par 100 centimètres au carré, et dans lequel une distance entre deux secondes unités est de 1 micromètre par 100 centimètres.

4. Article (100 ; 130 ; 160 ; 400) selon l'une quelconque des revendications 1 à 3, dans lequel la première unité de base (410) et l'au moins une des deuxièmes unités (420A, 420B) sont choisies indépendamment parmi une unité optique inorganique, une unité optique organique ou une unité optique mixte inorganique/organique.

5. Article (100 ; 130 ; 160 ; 400) selon la revendication 4, dans lequel l'unité optique organique a au moins une couche (412A-412E, 422A-422D, 424A-424D) qui est faite en un matériau polymère ; ou dans lequel chaque couche de l'unité optique organique est faite en un matériau organique.

6. Article (100 ; 130 ; 160 ; 400) selon la revendication 3, dans lequel la première unité de base (410) comporte de 4 à 20 couches (412A-412E) et l'une au moins des secondes unités (420A, 420B) comporte de 4 à 10 couches (422A-422D, 424A-424D), chaque couche ayant une épaisseur de 10 nanomètres à 100 nanomètres, l'unité optique (12A'/12M' - 12A"/12M' ; 112a-112b; 136a-136b ; 172a- 172b; 175a-175d ; 182 ; 185; 187a-187e ; 197 ; 200 ; 300 ; 402) a une épaisseur de 20 à 200 nanomètres.

7. Article (100 ; 130 ; 160 ; 400) selon l'une quelconque des revendications 1 à 6, dans lequel une couche réfléchissante (422A-422D, 424A-424D) de la deuxième unité (420A, 420B) est adjacente à la première unité de base (410), dans laquelle la couche réfléchissante a un pourcentage de réflexion minimum de 80 % ou plus.

8. Article (100 ; 130 ; 160 ; 400) selon l'une quelconque des revendications 1 à 7, dans lequel la première couleur structurelle (432), la deuxième couleur structurelle (434, 442) ou les deux présentent une seule teinte lorsqu'elles sont observées sous des angles de vue différents à au moins 15 degrés d'écart; ou dans lequel la première couleur structurelle, la deuxième couleur structurelle ou les deux présentent plusieurs teintes différentes lorsqu'elles sont observées sous des angles de vue différents à au moins 15 degrés d'écart.

9. Article (100 ; 130 ; 160 ; 400) selon l'une quelconque des revendications 1 à 7, dans lequel la première couleur structurelle (432), la deuxième couleur structurelle (434, 442) ou les deux ont une iridescence limitée.

**10.** Article (100 ; 130 ; 160 ; 400) selon la revendication 9, dans lequel la première couleur structurelle (432) est une couleur chromatique, dans lequel la deuxième couleur structurelle (434, 442) est achromatique.

**11.** Article (100 ; 130 ; 160 ; 400) selon la revendication 1, dans lequel la surface du substrat (406) comprend une surface texturée qui inclut une pluralité de caractéristiques de profil (222) et des zones planes plates, dans lequel les caractéristiques de profil s'étendent au-dessus des zones plates de la surface texturée.

**12.** Article (100; 130; 160 ; 400) selon la revendication 11, dans lequel les dimensions des éléments de profil (222), une forme des éléments de profil, un espacement entre la pluralité des éléments de profil, ou toute combinaison de ceux-ci, en combinaison avec l'unité optique (12A'/12M' - 12A"/12M' ; 112a- 112b ; 136a-136b ; 172a-172b ; 175a-175d ; 182 ; 185 ; 187a-187e ; 197 ; 200 ; 300 ; 402), affectent une teinte de la première couleur structurelle (432), une teinte de la seconde couleur structurelle (434, 442), une intensité de la première couleur structurelle, une intensité de la seconde couleur structurelle, un angle de vue auquel la première couleur structurelle est visible, un angle de vue auquel la seconde couleur structurelle est visible, ou toute combinaison de ces éléments ; ou dans lequel une teinte de la première couleur structurelle, une teinte de la deuxième couleur structurelle, une intensité de la première couleur structurelle, une intensité de la deuxième couleur structurelle, un angle de vue auquel la première couleur structurelle est visible, un angle de vue auquel la deuxième couleur structurelle est visible, ou toute combinaison de ceux-ci, ne sont pas affectés ou substantiellement pas affectés par les dimensions des caractéristiques du profil, une forme des caractéristiques du profil, un espacement entre la pluralité des caractéristiques du profil, ou toute combinaison de ceux-ci, de la surface texturée.

**13.** Procédé de fabrication d'un article (100 ; 130 ; 160 ; 400), comprenant : disposer l'unité optique (12A'/12M' - 12A"/12M' ; 112a-112b ; 136a-136b ; 172a-172b ; 175a-175d ; 182 ; 185 ; 187a-187e ; 197 ; 200 ; 300 ; 402) selon l'une quelconque des revendications 1 à 12 sur la surface de l'article.

**14.** Article (100 ; 130; 160 ; 400) comprenant : un produit dur procédé de la revendication 13.

**15.** Procédé de fabrication d'un article (100 ; 130 ; 160 ; 400), comprenant :

- disposer, appliquer ou positionner une première unité de base (410) sur la surface d'un substrat (406),
- masquer au moins une partie de la première unité de base, en créant une partie de la première unité de base comprenant des régions adjacentes masquées et non masquées,
- disposer, appliquer ou positionner une deuxième unité (420A, 420B) sur les régions non masquées,
- démasquer les régions masquées (en retirant éventuellement l'élément de masquage), en exposant une première surface de l'unité de base et une seconde surface de l'unité,

dans lequel la première unité de base confère une première couleur structurelle (432) et la surface de la deuxième unité confère une deuxième couleur structurelle (434, 442), dans lequel une teinte, une luminosité, une tonalité chromatique ou toute combinaison de ceux-ci de la première couleur structurelle et de la deuxième couleur structurelle sont différents lorsqu'ils sont observés sous le même angle d'observation par une personne ayant une acuité visuelle de 20/20.

FIG. 1A

FIG. 1B

FIG. 1C

FIG. 1D

FIG. 1E

FIG. 1F

FIG. 1G

FIG. 1H

FIG. 1I

FIG. 1J

FIG. 1K

FIG. 1L

FIG. 1M

Fig. 1N(a)

Fig. 1N(b)

Fig. 1O(a)

Fig. 1O(b)

Fig. 10(c)

Fig. 1P(a)

Fig. 1P(b)

FIG. 1Q(a)

FIG. 1Q(b)

FIG. 1Q(c)

FIG. 1Q(d)

FIG. 1Q(e)

200 — 242        244

245
245
245
230
240
240
240
220

222    224

FIG. 2A

300 —        344

345
345
345
330
340
340
340

320

FIG. 2B

## FIG. 3A

400

Second unit A
420A

422A-422D

424A-424D

Second unit B
420B

412A-412E

Optical unit (A-A Cross-section) 402

Substrate 406

First base unit 410

## FIG. 3B

Optical unit (Top view)

R

G

R

Second Structural Color 434A

First Structural Color 432

Second Structural Color 434B

## FIG. 3C

Second Structural Color 434

Top view of large section

First Structural Color 432

A Color 442

## REFERENCES CITED IN THE DESCRIPTION

**Patent documents cited in the description**

- US 63118240
- JP 2005174647 A
- US 2020308734 A1
- BR PI0503224 A
- US 6127026 A
- US 5713141 A
- US 5952065 A
- US 6082025 A
- US 6013340 A
- US 6203868 B
- US 6321465 B